(19) Europäisches Patentamt
European Patent Office
Office européen des brevets

(11) **EP 4 439 708 A1**

(12) **EUROPEAN PATENT APPLICATION**

(43) Date of publication:
**02.10.2024 Bulletin 2024/40**

(21) Application number: **24156291.7**

(22) Date of filing: **07.02.2024**

(51) International Patent Classification (IPC):
$H01M\ 4/136^{(2010.01)}$  $H01M\ 4/1397^{(2010.01)}$
$H01M\ 4/36^{(2006.01)}$  $H01M\ 4/46^{(2006.01)}$
$H01M\ 4/58^{(2010.01)}$  $H01M\ 4/62^{(2006.01)}$
$H01M\ 10/052^{(2010.01)}$

(52) Cooperative Patent Classification (CPC):
H01M 4/136; H01M 4/1397; H01M 4/362;
H01M 4/364; H01M 4/366; H01M 4/463;
H01M 4/5815; H01M 4/625; H01M 10/052

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039345**

(71) Applicant: **Samsung SDI Co., Ltd.**
**Yongin-si, Gyeonggi-do 17084 (KR)**

(72) Inventors:
• **SHIM, Kyueun**
**17084 Yongin-si, Gyeonggi-do (KR)**

• **PARK, Taehyun**
**17084 Yongin-si, Gyeonggi-do (KR)**
• **SON, Inhyuk**
**17084 Yongin-si, Gyeonggi-do (KR)**
• **LEE, Jieun**
**17084 Yongin-si, Gyeonggi-do (KR)**
• **JO, Sungnim**
**17084 Yongin-si, Gyeonggi-do (KR)**

(74) Representative: **Michalski Hüttermann & Partner Patentanwälte mbB**
**Kaistraße 16A**
**40221 Düsseldorf (DE)**

(54) **COMPOSITE CATHODE ACTIVE MATERIAL, METHOD OF PREPARING THE SAME, CATHODE INCLUDING THE SAME, AND ALL-SOLID SECONDARY BATTERY INCLUDING THE SAME**

(57) A composite cathode active material, a method of preparing the same, a cathode including the same, and an all-solid secondary battery are provided. The composite cathode active material may include a core including a lithium-containing sulfide-based cathode active material; and a shell covering a surface of the core, wherein the shell may include at least one first metal oxide represented by formula $M_aO_b$ ($0<a\leq3$ and $0<b<4$, wherein when a is 1, 2, or 3, b is not an integer), a first carbon-based material, and a second carbon-based material, the first metal oxide may be within a matrix of the first carbon-based material, M may be at least one metal selected from Groups 2 to 16 of the Periodic Table of Elements, and the second carbon-based material includes a fibrous carbon having an aspect ratio of 10 or more.

FIG. 1

EP 4 439 708 A1

**Description**

**CROSS-REFERENCE TO RELATED APPLICATION**

The present application claims priority to and the benefit of Korean Patent Application No. 10-2023-0039345, filed on March 26, 2023, in the Korean Intellectual Property Office, the entire content of which is hereby incorporated by reference.

**BACKGROUND**

**1. Field**

Embodiments to the present disclosure relate to a composite cathode active material, a method of preparing the same, a cathode including the same, and an all-solid secondary battery.

**2. Description of the Related Art**

In line with recent requirements and/or desirable features in the industry, batteries with relatively high energy density and stability are actively being developed. For example, lithium batteries are commercialized not only in the fields related to information-related devices and communication devices, but also in the automobile industry. In the automobile industry, safety is particularly important as automobiles are responsible for the safety and/or comfort of people.
Because an electrolyte containing a flammable organic solvent is utilized as an electrolyte in lithium batteries, such lithium batteries may overheat and catch fire in the event of a short circuit.
In light of this, an all-solid battery utilizing a solid electrolyte instead of an electrolyte solution is proposed.
Such an all-solid (e.g., solid-state) battery does not utilize any flammable organic solvent, and therefore may significantly decrease the risk of a fire or explosion even in the event of a short-circuit. As a result, such an all-solid battery may be significantly safer than a lithium battery utilizing an electrolyte solution.
A secondary battery utilizes a sulfur-based material as a cathode active material to increase capacity. A secondary battery utilizing a sulfur-based material has a higher theoretical energy capacity relative to a lithium-ion battery, and due to a low cost of sulfur-based materials, the manufacturing cost of the secondary battery may be reduced.
During charging and discharging of the secondary battery, polysulfides are generated from the sulfur-based materials, and the generated polysulfides migrate to the anode and react with the anode. Due to these side reactions, the lifetime and capacity characteristics of the secondary battery may deteriorate.

**SUMMARY**

Aspects of one or more embodiments of the present disclosure relate to a composite cathode active material having improved capacity by inhibiting or reducing side reactions with polysulfides, and a method of preparing the composite cathode active material.
Aspects of one or more embodiments of the present disclosure relate to a cathode including the composite cathode active material.
Aspects of one or more embodiments of the present disclosure relate to an all-solid (e.g., solid-state) secondary battery having improved lifetime characteristics by including the cathode.
Additional aspects will be set forth in part in the description which follows and, in part, will be apparent from the description, or may be learned by practice of the presented embodiments of the disclosure.
According to one or more embodiments of the present disclosure, a composite cathode active material includes: a core including a lithium-containing sulfide-based cathode active material; and a shell covering a surface of the core, wherein the shell may include at least one first metal oxide represented by $M_aO_b$ ($0<a\leq3$ and $0<b<4$, wherein when a is 1, 2, or 3, b is not an integer), a first carbon-based material, and a second carbon-based material, wherein the first metal oxide is within a matrix of the first carbon-based material, M is at least one metal selected from Group 2 to Group 16 of the Periodic Table of Elements, and the second carbon-based material includes a fibrous carbon having an aspect ratio of 10 or more.
According to one or more embodiments of the present disclosure, an all-solid battery includes: a cathode layer; an anode layer; and a solid electrolyte layer between the cathode layer and the anode layer, wherein the cathode layer may include the cathode described above.
According to one or more embodiments of the present disclosure, a method of preparing a composite cathode active material includes: a first process including: providing a lithium-containing sulfide-based compound; providing a composite; and providing a second carbon-based material, and a second process to prepare a composite cathode active material, the second process including: mechanically milling the lithium-containing sulfide-based compound, the composite, and the second carbon-based material; or mechanically milling the lithium-containing sulfide-based compound and the composite; and mixing the milling product with the second carbon-based material, wherein the composite includes at least one first metal oxide represented by formula $M_aO_b$ ($0<a\leq3$ and $0<b<4$, wherein when a is 1, 2, or 3, b is not an integer), a first carbon-based material, and a second carbon-based material, the first metal oxide is in a matrix of the first carbon-based material, M is at least one metal selected from Groups 2 to 13, Group 15, or Group 16 of the Periodic Table of Elements, and the second carbon-based material includes a fibrous carbon having an aspect ratio of 10 or more.

**BRIEF DESCRIPTION OF THE DRAWINGS**

The above and other aspects, features, and/or principles of certain embodiments of the present disclosure will be more apparent from the following description taken in conjunction with the accompanying drawings, in which:

FIG. 1 schematically shows a structure of a composite cathode active material according to one or more embodiments of the present disclosure;
FIG. 2 is a cross-sectional view of an all-solid secondary battery according to one or more embodiments of the present disclosure; and
FIG. 3 is a cross-sectional view of an all-solid secondary battery according to one or more embodiments of the present disclosure.

**DETAILED DESCRIPTION**

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Reference will now be made in more detail to embodiments, examples of which are illustrated in the accompanying drawings, wherein, unless otherwise provided, like reference numerals refer to like elements throughout, and duplicative descriptions thereof may not be provided. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that when an element or layer is referred to as being "on," "connected to," or "over" another element or layer, it can be directly on, connected to, or over the other element or layer, or one or more intervening elements or layers may also be present. In contrast, when an element is referred to as being "directly on," "directly connected to," or "directly over" another element, there are no intervening elements present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," *etc.,* may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. For example, a first element, component, region, layer, or section could be termed a second element, component, region, layer, or section, without departing from the spirit and scope of the present disclosure.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. The term "at least one" should not be interpreted as being limited to a singular form. It will be further understood that the terms "comprises," "comprising," "includes" and/or "including," when used in this specification, specify the presence of the stated features, regions, integers, steps, operations, elements, and/or components, but do not preclude the presence or addition of one or more other features, regions, integers, steps, operations, elements, components, and/or groups thereof.

In the drawings, the relative sizes of elements, layers, and regions may be exaggerated for clarity.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the present specification and/or the relevant art, and should not be interpreted in an idealized or overly formal sense, unless expressly so defined herein.

"Group" refers to a group of the Periodic Table of Elements of the Elements according to the 1-18 Group numbering system by the International Union of Pure and Applied Chemistry ("IUPAC").

The term "particle diameter" as used herein refers to an average particle diameter when the particle is spherical, and refers to an average major axis length when the particle is non-spherical. The particle diameter may be measured utilizing a particle size analyzer (PSA). The term "particle diameter" as used herein refers to an average particle diameter, for example. The term "average particle diameter" as used herein refers to, for example, a median particle diameter (D50).

D50 refers to the average diameter (or size) of particles whose cumulative volume corresponds to 50 vol% in the particle size distribution (*e.g.*, cumulative distribution), and refers to the value of the particle size corresponding to 50% from the smallest particle when the total number of particles is 100% in the distribution curve accumulated in the order of the smallest particle size to the largest particle size, as measured by a laser diffraction method.

D90 refers to the average diameter (or size) of particles whose cumulative volume corresponds to 90 vol% in the particle size distribution (*e.g.*, cumulative distribution), and refers to the value of the particle size corresponding to 90% from the smallest particle when the total number of particles is 100% in the distribution curve accumulated in the order of the smallest particle size to the largest particle size, as measured by a laser diffraction method.

D10 refers to the average diameter (or size) of particles whose cumulative volume corresponds to 10 vol% in the particle size distribution (*e.g.*, cumulative distribution), and refers to the value of the particle size corresponding to 10% from the smallest particle when the total number of particles is 100% in the distribution curve accumulated in the order of the smallest particle size to the largest particle size, as measured by a laser diffraction method.

Also, the term "diameter" in the content of other suitable items, as used herein refers to an average (*e.g.*, fiber or nanofiber) diameter when the item (*e.g.*, fiber) has a circular cross-section, and refers to an average major axis length when the item (*e.g.*, fiber) is non-circular in its cross-section.

Average lengths (e.g. average major axis length, average minor axis length) and average thicknesses may be measured by using the same methods as measuring the "particle diameter".

The "aspect ratio" used herein may refer to the average aspect ratio and may be determined from SEM images.

As used herein, the term "metal" refers to both metals and metalloids such as silicon and germanium, in an elemental or ionic state.

As used herein, the term "alloy" refers to a mixture of two or more metals.

While specific examples are described herein, alternatives, modifications, variations, improvements, and substantial equivalents of the examples disclosed herein, including those that are presently unforeseen or unappreciated, may arise from applicants or those skilled in the art. Accordingly, the appended claims as filed and as they can be amended are intended to embrace all such alternatives, modifications, variations, improvements and substantial equivalents.

Hereinbelow, a composite cathode active material according to one or more embodiments, a cathode including the same, and an all-solid secondary battery will be described in greater detail.

A composite cathode active material may include a core including a lithium-containing sulfide-based cathode active material; and a shell conforming to a surface of the core, wherein the shell may include at least one first metal oxide represented by formula $M_aO_b$ ($0<a\leq3$ and $0<b<4$, wherein when a is 1, 2, or 3, b is not an integer), a first carbon-based material, and a second carbon-based material, wherein the at least one first metal oxide may be disposed within a matrix of the first carbon-based material, M may be at least one metal selected from Groups 2 to 16 of the Periodic Table of Elements, and the second carbon-based material may include a fibrous carbon having an aspect ratio of 10 or more.

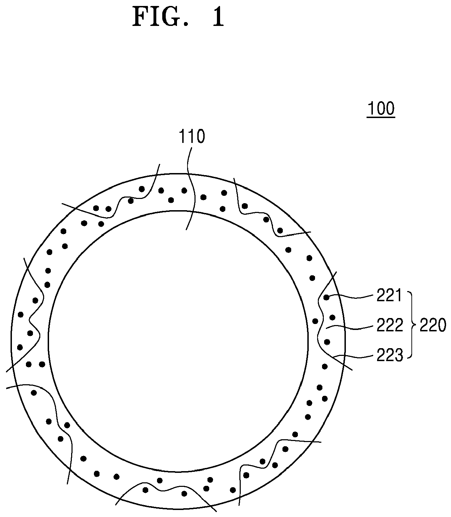

b is not an integer, for example, $0<b<3$, $0<b<2.5$, $0<b<2$, $0<b<1.5$, or $0<b<1$,Referring to FIG. 1, a composite cathode active material 100 may include a core 110 and a shell 220 disposed continuously or discontinuously along a surface of the core 110. The shell 220 may completely or partially cover the core 110. The core 110 may include a lithium-containing sulfide-based cathode active material, and the shell 220 may include a first metal oxide 221, a first carbon-based material 222, and a second carbon-based material 223.

The lithium-containing sulfide-based cathode active material, although it is an insulating material with little electronic conductivity, may form an effective conductive network by including the shell. As a result, including a cathode including such a composite cathode active material may make it possible to manufacture an all-solid secondary battery that has an improved lifetime and improved high-rate performance, mitigated volume expansions at electrode terminals, increased mixture density, and high energy density characteristics.

The second carbon-based material 223 may include a fibrous carbon having an aspect ratio of 10 or more. In the preparation of the composite cathode active material 100, the shell 220 may be disposed on the core 110 of a lithium-containing sulfide-based cathode active material by utilizing a composite including a plurality of first metal oxides 221 disposed in a matrix of the first carbon-based material 222. Thus, the shell 220 may be uniformly disposed on the core 110 while agglomeration of the first carbon-based material 222 is prevented or reduced. The shell 220 disposed on the core 110 may effectively prevent or reduce the core 110 and the electrolyte from coming in contact with each other. By effectively preventing or reducing the core 110 and the electrolyte from coming in contact with each other, the shell 20 may prevent or reduce side reactions due to contact between the core 110 and the electrolyte. Further, by disposing the shell 220 on the core 110, cation mixing due to contact of the core 110 with the electrolyte may be inhibited or reduced. The inhibition or reduction of cation mixing due to the contact of the core 110 with the electrolyte may inhibit or reduce the formation of resistance layers inside and/or on a surface of the composite cathode active material 100. The first carbon-based material may be, for example, a crystalline carbon-based material. The first carbon-based material may be, for example, a carbon-based nanostructure. The first carbon-based material may be, for example, a carbon-based two-dimensional nanostructure. For example, the first carbon-based material may be graphene. In this case, because the shell including graphene and/or a matrix thereof has flexibility, volume changes of the composite cathode active material may be easily accommodated during cycling of the battery, and the formation of cracks inside the composite cathode active material may be suppressed or reduced. Due to high electronic conductivity of graphene, interfacial resistance between the composite cathode active material and the electrolyte solution may decrease. Therefore, despite the introduction of the shell including graphene, internal resistance of a lithium battery may be maintained or reduced. In contrast, because the carbon-based materials in the related art are easily prone to agglomeration, it is difficult to uniformly coat such carbon-based materials on a lithium transition metal oxide.

As described above, the shell may include a fibrous carbon having an aspect ratio of 10 or more as the second carbon-based material. As a result, the conduction path in the composite cathode active material may be further elongated. By forming a three-dimensional conductive network among a plurality of composite cathode active materials, the second carbon-based material may reduce the internal resistance of the cathode including the composite cathode active materials. As the fibrous carbon is fixed on the composite cathode active material, a substantially uniform and stable three-dimensional conductive network may be formed among a plurality of composite cathode active materials. Thus, as the composite cathode active material includes the second carbon-based material, a lithium battery provided with the composite cathode active material may have improved high-rate performance. In contrast, a simple mixture of the core and fibrous carbon as the second carbon-based material, due to agglomeration of fibrous carbon and/or the like, may fail to form a substantially uniform three-dimensional conductive network among a plurality of particles. As shown in FIG. 1, the second carbon-based material 223 may be disposed on a surface of the composite cathode active material 100. Further, the second carbon-based material 223 may be protruded from the surface of the composite cathode active material 100. Accordingly, the second carbon-based material 223 may effectively provide a conductive network among a plurality of composite cathode active materials 100. As the second carbon-based material 223 is disposed in the matrix of the first carbon-based material 222, the second carbon-based material 223 may be easily coated on the core 110. The matrix of the first carbon-based material 222 may act as a binder binding the core and the second carbon-based material 223 together. Therefore, in a case in which the matrix of the first carbon-based material 222 is absent, it may be difficult to coat of the second carbon-based material 223 on the core 110, or the second carbon-based material 223 may be easily delaminated from the core 110 during the process of preparing a cathode slurry. If (*e.g.*, when) a binder is added to bind the core 110 and the second carbon-based material 233, as the core 110 is coated with an insulating binder, the internal resistance of the composite cathode active material 100 may increase. If (*e.g.*, when) the core coated with a binder and the second carbon-based material is subjected to a high-temperature heat treatment for carbonization of the binder, the core 110 and the second carbon-based material 223 may deteriorate during the heat treatment.

The second carbon-based material may have an aspect ratio of 10 or more, or 20 or more. For example, the second carbon-based material may have an aspect ratio of about 10 to about 100,000, about 10 to about 80,000, about 10 to about 50,000, about 10 to about 10,000, about 10 to about 5,000, about 10 to about 1,000, about 10 to about 500, about 10 to about 100, or about 10 to about 50. The aspect ratio of the second carbon-based material is, for example, a ratio of length of the major axis passing through the center of the second carbon-based material to length of the minor axis that is perpendicular to the major axis, wherein the major axis passes through the second carbon-based material and through the center of the second carbon-based material, and the minor axis is perpendicular to the major axis and is a diameter of the second carbon-based material.

For example, the second carbon-based material may have a diameter of 500nm or less, 400nm or less, 300nm or less, 100nm or less, 50 nm or less, 30 nm or less, 20 nm or less, or 10 nm or less. For example, the second carbon-based material may have a diameter of about 1 nm to about 500 nm, about 1 nm to about 300 nm, about 1 nm to about 50 nm, about 1 nm to about 30 nm, or about 1 nm to about 10 nm. For example, the second carbon-based material may have a diameter of about 5 nm to about 500 nm, about 5 nm to about 300 nm, or about 6 nm to about 300 nm, If (*e.g.*,

when) the diameter of the second carbon-based material is excessively large, the absolute number of filaments per unit volume decreases, and therefore, the effect of reducing the internal resistance may be insignificant. If (*e.g.*, when) the diameter of the second carbon-based material is excessively small, substantially uniform dispersion may be difficult.

For example, the second carbon-based material may have a length (e.g. average length) of 1,000 $\mu$m or less, 100 $\mu$m or less, 50 $\mu$m or less, 30 $\mu$m or less, 20 $\mu$m or less, 10 $\mu$m or less, 5 $\mu$m or less, 2 $\mu$m or less, 1 $\mu$m or less, 500 nm or less, or 300 nm or less. For example, the second carbon-based material may have a length (e.g. average length) of about 100 nm to about 1,000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. For example, the second carbon-based material may have a length of about 500 nm to about 1,000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbon-based material increases, the internal resistance of an electrode may decrease. If (*e.g.*, when) the length of the second carbon-based material is excessively small, it may be difficult to provide an effective conduction path.

The second carbon-based material may include, for example, a carbon nanofiber, a carbon nanotube, or a combination thereof.

For example, the carbon nanotube may include a primary carbon nanotube structure, a secondary carbon nanotube structure formed by agglomeration of a plurality of primary carbon nanotube particles, or a combination thereof.

The primary carbon nanotube structure may be one (*e.g.*, a single) carbon nanotube unit. The carbon nanotube unit has a graphite sheet in a cylindrical form with a nano-sized diameter and has a sp$^2$ bond structure. According to a bending angle and a structure of the graphite sheet, characteristics of conductors or characteristics of semiconductors may be exhibited. The carbon nanotube unit may be classified, depending on the number of bonds a wall is made of (*e.g.*, consists of), into a singlewalled carbon nanotube (SWCNT), a double-walled carbon nanotube (DWCNT), multiwalled carbon nanotube (MWCNT), triple-Walled carbon nanotubes (TWCNT), and/or the like. As the wall thickness of the carbon nanotube structure unit decreases, the resistance decreases.

The primary carbon nanotube structure may include, for example, an SWCNT, a DWCNT, an MWCNT, or a combination thereof. For example, the primary carbon nanotube structure may have a diameter (e.g. average diameter) of 1 nm or more, or 2 nm or more. For example, the primary carbon nanotube structure may have a diameter (e.g. average diameter) of 20 nm or more, or 10 nm or more. For example, the primary carbon nanotube structure may have a diameter (e.g. average diameter) of about 1 nm to about 20 nm, about 1 nm to about 15 nm, or about 1 nm to about 10 nm. For example, the primary carbon nanotube structure may have a length of 100 nm or more, or 200 nm or more. For example, the primary carbon nanotube structure may have a length of 2 $\mu$m or less, 1 $\mu$m or less, 500 nm or less, or 300 nm or less. For example, the primary carbon nanotube structure may have a length of about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter (e.g. average diameter) and length (e.g. average length) of the primary carbon nanotube structure may be measured from a scanning electron microscope (SEM) image or a transmission electron microscope (TEM) image.

In one or more embodiments, the diameter and/or length of the primary carbon nanotube structure may be measured by a laser diffraction method.

The secondary carbon nanotube structure may be a structure formed by assembling the primary carbon nanotube structure to form a bundle type or kind or a rope type or kind, in whole or in part. The secondary carbon nanotube structure may include, for example, bundle-type or kind carbon nanotubes, rope-type or kind carbon nanotubes, or a combination thereof. For example, the secondary carbon nanotube structure may have a diameter (e.g. average diameter) of 2 nm or more, or 3 nm or more. For example, the secondary carbon nanotube structure may have a diameter (e.g. average diameter) of 50 nm or less, 30 nm or less, 20 nm or less, or 10 nm or less. For example, the secondary carbon nanotube structure may have a diameter (e.g. average diameter) of about 2 nm to about 50 nm, about 2 nm to about 30 nm, or about 2 nm to about 20 nm. For example, the secondary carbon nanotube structure may have a length (e.g. average length) of 500 nm or more, 700 nm or more, 1 $\mu$m or more, or 10 $\mu$m or more. For example, the secondary carbon nanotube structure may have a length (e.g. average length) of 1,000 $\mu$m or less, 500 $\mu$m or less, or 100 $\mu$m or less. For example, the secondary carbon nanotube structure may have a length (e.g. average length) of about 500 nm to about 1,000 $\mu$m, about 500 nm to about 500 $\mu$m, about 500 nm to about 200 $\mu$m, about 500 nm to about 100 $\mu$m, or about 500 nm to about 50 $\mu$m. The diameter (e.g. average diameter) and length (e.g. average length) of the secondary carbon nanotube structure may be measured from an SEM image or an optical microscope image. In one or more embodiments, the diameter and/or length of the secondary carbon nanotube structure may be measured by a laser diffraction method.

The secondary carbon nanotube structure may be utilized in the preparation of the composite cathode active material, for example, by being dispersed in a solvent and/or the like, and converted into the primary carbon nanotube structure.

The content (*e.g.*, amount) of the second carbon-based material may be, for example, about 0.1 wt% to about 50 wt%, about 1 wt% to about 40 wt%, or about 5 wt% to about 30 wt%, with respect to the total weight of the first carbon-based material and the second carbon-based material. Including the first carbon-based material and the second carbon-based material within the above ranges in the composite cathode active material may more effectively secure the conduction path in the composite cathode active material and therefore, may further decrease the internal resistance of the composite cathode active material. As a result, the cycling performance of a lithium battery including the composite cathode active material may further improve. The content (*e.g.*, amount) of the second carbon-based material may be about 5 wt% to about 20 wt%, about 6 wt% to about 19 wt%, about 8 wt% to about 19 wt%, or about 9 wt% to about 19 wt%, based on 100 wt% of the total weight of the composite cathode active material. Including the second carbon-based material within the above ranges in the composite cathode active material may secure the conduction path in the composite cathode active material and therefore, may further decrease the internal resistance of the composite cathode active material. As a result, the cycling performance of a lithium battery including the composite anode active material may further improve.

Hereinafter, the following description is made for the purpose of providing a basis that supports an excellent or suitable effect of a composite cathode active material according to one or more embodiments; however, it should be understood that the description is provided to further the understanding of the present disclosure disclosed herein and should not be construed as limiting the present disclosure in any way.

The composite cathode active material may include a first carbon-based material, and by utilizing a composite including a plurality of first metal oxides disposed in the matrix, a substantially uniform shell may be disposed on a core while agglomeration of the first carbon-based material is prevented or reduced. Accordingly, by effectively preventing or substantially preventing the core and electrolyte from coming in contact with each other, side reactions due to contact between the core and the electrolyte may be effectively prevented or reduced. The first carbon-based material may be, for example, a crystalline carbon-based material. The first carbon-based material may be, for example, a carbon-based nanostructure. The first carbon-based material may be, for example, a carbon-based two-dimensional nanostructure. The first carbon-based material may be, for example, a carbon-based flake. For example, the first carbon-based material may be graphene.

The shell including graphene and/or its matrix (*e.g.*, a matrix including graphene) has flexibility, and thus may easily accommodate volume changes of the core during cycling. Therefore, because crack formation on the surface and/or inside of the composite cathode active material during cycling is inhibited or reduced, the formation of a solid electrolyte interface (SEI) on the surface and/or inside of the composite cathode active material may be inhibited or reduced. As a result, degradation of a lithium battery including the composite cathode active material may be inhibited or reduced. In one or more embodiments, in a lithium-containing sulfide-based compound of the related art, lithium polysulfides generated by a reaction between lithium ions and sulfur are dissolved in an electrolyte solution, resulting in deterioration in the capacity and lifetime characteristics of the battery.

Because lithium sulfide ($Li_2S$) is an insulating material with little electrical conductivity, for lithium sulfide ($Li_2S$) to be usable in a cathode active material, the issue of low electrical conductivity needs to be addressed through complexation with a carbon material having high electrical conductivity. Further, because an all-solid lithium sulfur battery does not contain substantially any solvent in a solid electrolyte layer, a cathode, and an anode mixture layer thereof, and thus has low electronic conductivity and low lithium ion conductivity, it may be difficult to secure sufficient capacity during charge/discharge. Therefore, it is important to form an interface to encourage active electrochemical reactions between the cathode active material and the solid electrolyte.

In view of the above, aspects of one or more embodiments of the present disclosure relate to a composite cathode active material capable of addressing the issue of low electronic conductivity of a lithium-containing sulfide-based compound.

In a composite cathode active material according to one or more embodiments, by coating a lithium-containing sulfide-based compound with a composite, and by introducing a second carbon-based material between lithium-containing sulfide-based compound particles coated with the composite to impart conductivity, an all-solid secondary battery with improved lifetime characteristics may be prepared.

The composite cathode active material may include a matrix of a first carbon-based material, and if (*e.g.*, when) the first metal oxide is $Al_2O_3$ in a composite including a plurality of first metal oxides disposed within the matrix, $Al_2O_3$ reacts with Li of $Li_2S$ to form lithium ion-conductive compounds such as $LiAlO_2$ and $LiAlO_4$, thus imparting lithium-ion conductivity to the composite cathode active material. As a result, an interfacial resistance between the composite cathode active material and the sulfide-based solid electrolyte at the cathode may decrease, and cycling performance of the all-solid secondary battery may improve. In addition, $Al_2O_3$ adsorbs to lithium polysulfides and inhibits or reduces side reactions, and thus may improve cycling performance. As such, $Al_2O_3$ has an effect of inhibiting or reducing the dissolution of lithium polysulfides generated during battery operation. The matrix of the first carbon-based material (*e.g.*, graphene matrix) imparts electronic conductivity to the composite cathode active material and buffers volume changes of the core, and thus may improve cycling performance of the all-solid secondary battery.

In the shell, the composite may be capable of carbon nanotube (CNT)-anchoring through $\pi$-$\pi$ bonds with fibrous carbon, such as CNT. Because a CNT-coating is prepared by a dry method, CNT separation as observed in a wet coating may be inhibited or reduced, and even in the subsequent electrode slurry preparation process, CNT may not separate from the composite cathode active material.

The content (*e.g.*, amount) of the second carbon-based material may be about 5 wt% to about 20 wt%, about 8 wt% to about 18 wt%, or about 9 wt% to about 17 wt%, based on 100 wt% of the total weight of the composite cathode active material. If (*e.g.*, when) the content (*e.g.*, amount) of the second carbon-based material is within the above ranges, good or suitable workability may be provided without an increase in viscosity in the electrode slurry.

Because the shell of the composite cathode active material includes the second carbon-based material, the composite cathode active material may function as a conductive material as well. Therefore, the amount of a conductive material utilized in the cathode may be reduced. Although the conductive material may be necessary for improving conductivity of a battery, if (*e.g.*, when) the amount of the conductive material increases, the mixture density of the cathode decreases, which, as a result, decreases the energy density of the lithium battery. However, the cathode of one or more embodiments of the present disclosure, by utilizing the above-described composite cathode active material, may reduce the amount of the conductive material without an increase in internal resistance. As a result, because the mixture density of the cathode increases, the energy density of the lithium battery may consequently increase. For example, in a high-capacity lithium battery, the energy density of the lithium battery may be significantly increased by increasing the amount of the composite cathode active material while reducing the amount of the conductive material.

Because the first carbon-based material included in the shell of the composite cathode active material is derived from a graphene matrix, the first carbon-based material has low density and high porosity relative to a carbon-based material derived from a graphitic material in the related art. The d002 interplanar distance of the first carbon-based material included in the shell of the composite cathode active material may be, for example, 3.38 Å or more, 3.40 Å or more, 3.45 Å or more, 3.50 Å or more, 3.60 Å or more, 3.80 Å or more, or 4.00 Å or more. The d002 interplanar distance of the first carbon-based material included in the shell of the composite cathode active material may be, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In contrast, the d002 interplanar distance of a carbon-based material derived from a graphitic material of the related art may be, for example, 3.38 Å or less, or from about 3.35 Å to about 3.38 Å.

For example, the shell may include a single type or kind of first metal oxide, or two or more different types (kinds) of first metal oxides.

As a result, an increase in internal resistance of a lithium battery including the composite cathode active material may be suppressed or reduced, and high-temperature and high-voltage cycling performance of the lithium battery may improve.

In the composite cathode active material, the content (*e.g.*, amount) of the composite including the first metal oxide and the first carbon-based material may be about 25 wt% to about 40 wt%, or about 27 wt% to about 40 wt%, based on 100 wt% of the total weight of the composite cathode active material. Further, the content (*e.g.*, amount) of the first metal oxide in the composite may be about 60 wt% to about 80 wt%, about 65 wt% to about 80 wt%, or about 70 wt% to about 75 wt%, based on 100 wt% of the total weight of the composite. If (*e.g.*, when) the content (*e.g.*, amount) of the first metal oxide in the composite is within the above ranges, lifetime and capacity characteristics of the all-solid secondary battery may further improve.

In the composite cathode active material, the content (*e.g.*, amount) of the lithium-containing sulfide-based cathode active material may be about 40 parts by weight to about 65 parts by weight, about 45 parts by weight to about 60 parts by weight, or about 48 parts by weight to about 55 parts by weight, with respect to 100 wt% (*i.e.*, the total weight) of the composite cathode active material. If (*e.g.*, when) the content (*e.g.*, amount) of the lithium-containing sulfide-based cathode active material is within the above ranges, lifetime and capacity characteristics of the all-solid secondary battery may further improve.

The shell may further include a solid electrolyte. Here, the solid electrolyte layer may be a sulfide-based solid electrolyte, an oxide-based solid electrolyte, a polymer solid electrolyte, or a combination thereof.

The shell may have a thickness of about 10 nm to about 2 $\mu$m, the shell may have a single-layer structure or a multi-layer structure, the shell may be a dry coating layer (*e.g.*, a layer formed by dry coating), and the content (*e.g.*, amount) of the shell may be 5 wt% or less with respect to the total weight of the composite cathode active material.

The content (*e.g.*, amount) of a first metal (the first metal being, for example, the metal included in the first metal oxide) included in the shell may be, for example, greater than 0 at% to about 10 at%, about 0.1 at% to 9.5 at%, about 1 at% to about 9 at%, about 2 at% to 9 at%, about 3 at% to about 9 at%, about 3 at% to about 8 at%, or about 4 at% to about 8 at%, with respect to the total number of atoms in the shell. As the shell includes the first metal in an amount in the above ranges, cycling performance of an all-solid secondary battery including the composite cathode active material may further improve. The content (*e.g.*, amount) of the first metal element included in the shell may be obtained, for example, from a peak obtained by measuring an XPS spectrum of a surface of the composite cathode active material.

The content (*e.g.*, amount) of carbon included in the shell may be, for example, about 80 at% to about 99 at%, about 80 at% to about 95 at%, about 80 at% to about 93 at%, about 80 at% to about 91 at%, or about 83 at% to about 90 at%, with respect to the total number of atoms in the shell. As the shell includes carbon in an amount in the above ranges, cycling performance of a lithium battery including the composite cathode active material may further improve. The content (*e.g.*, amount) of carbon included in the shell may be obtained, for example, from a peak obtained by measuring an XPS spectrum of a surface of the composite cathode active material.

The first metal oxide may include at least one metal of (*e.g.*, at least one metal selected from among) Al, Nb, Mg, Sc, Ti, Zr, V, W, Mn, Fe, Co, Pd, Cu, Ag, Zn, Sb, and/or Se. For example, the first metal oxide may be at least one of (*e.g.*, at least one selected from among) $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnOx$ (0<x<1), $Sb_2O_z$ (0<z<3), and/or $SeO_y$ (0<y<2). As the first metal oxide is disposed inside the matrix of a first carbon-based material, uniformity (*e.g.*, substantial uniformity) of the shell disposed on the core may improve, and withstand voltage properties of the composite cathode active material may further improve. For example, the shell may include $Al_2O_x$ (0<x<3) as the first metal oxide.

The shell may further include one or more types (kinds) of second metal oxides, represented by $M_aO_c$ (0<a≤3 and 0<c≤4, wherein when a is 1, 2, or 3, c is an integer). M may be at least one metal of (*e.g.*, at least one metal selected from) Groups 2 to 13, Group 15, and/or Group 16 of the Periodic Table of Elements. For example, the second metal oxide may include the same metal as the first metal oxide, and the ratio c/a of a and c in the second metal oxide may have a greater value than the ratio (b/a) of a and b in the first metal oxide (where the first metal oxide is represented by $M_aO_b$, (0<a≤3 and 0<b<4, wherein when a is 1, 2, or 3, b is not an integer), as further described herein). For example, c/a>b/a may be satisfied. The second metal oxide may be (*e.g.*, may be selected, for example, from among) $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and/or $SeO_2$. The first metal oxide may be a reduction product of the second metal oxide. The first metal oxide may be obtained from a partial or complete reduction of the second metal oxide. Accordingly, the first metal oxide may have a lower oxygen content (*e.g.*, amount) and a higher oxidation number of the metal, relative to the second metal oxide. For example, the shell may include $Al_2O_x$ (0<x<3) as the first metal oxide, and $Al_2O_3$ as the second metal oxide

In the composite cathode active material, for example, a first carbon-based material included in the shell and the transition metal of a lithium transition metal oxide included in the core may be chemically bound via a chemical bond. A carbon atom (C) of the first carbon-based material included in the shell, and the transition metal (Me) of the lithium transition metal oxide may be chemically bound, for example, through a C-O-Me bond via an oxygen atom (*e.g.*, a C-O-Ni bond or C-O-Co bond). Through chemical binding of the first carbon-based material included in the shell and the lithium transition metal oxide included in the core via a chemical bond, the core and the shell may be complexated. Thus, the resulting complex may be distinguishable from simple physical mixtures of the first carbon-based material and the lithium transition metal oxide.

In one or more embodiments, the first carbon-based material and the first metal oxide included in the shell may also be chemically bound via a chemical bond. Here, the chemical bond may be, for example, a covalent bond or an ionic bond. For example, the covalent bond may be a bond that includes at least one of (*e.g.*, one from among) an ester group, an ether group, a carbonyl group, an amide group, a carbonate anhydride group, and/or an acid anhydride group. For example, the ionic bond may be a bond that includes a carboxylate ion, an ammonium ion, an acyl cation group, and/or the like.

For example, the shell may have a thickness of about 1 nm to about 5 μm, about 1 nm to about 1 μm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, or about 1 nm to about 20 nm. If (*e.g.*, when) the shell has a thickness within the above ranges, an increase in the internal resistance of a lithium battery including the composite cathode active material may be suppressed or reduced.

For example, the composite cathode active material may further include a third metal doped on a core, or a third metal oxide coated on the core. In one or more embodiments, the shell may be disposed on the doped third metal or on the coated third metal oxide. For example, after the third metal is doped on a surface of the lithium transition metal oxide included in the core, or the third metal oxide is coated on a surface of the lithium transition metal oxide included in the core, the shell may be disposed on the third metal and/or the third metal oxide. For example, a composite cathode active material may include a core; an interlayer disposed on the core; and a shell disposed on the interlayer, wherein the interlayer may include a third metal or a third metal oxide. The third metal may be at least one metal of (*e.g.*, at least one metal selected from among) Al, Zr, W, and/or Co, and the third metal oxide may be $Al_2O_3$, $Li_2O$-$ZrO_2$, $WO_2$, CoO, $Co_2O_3$, $Co_3O_4$, and/or the like.

For example, the shell included in the composite cathode active material may include a composite including a first metal oxide and a first carbon-based material, such as graphene, and at least one selected from milling products of the composite, wherein the first metal oxide may be disposed in a matrix of the first carbon-based material, *e.g.*, in a graphene matrix. For example, the shell may be prepared from a composite including a first metal oxide and a first carbon-based material, such as graphene. In addition to the first metal oxide, the composite may further include a second metal oxide. For example, the composite may include two or more types (kinds) of first metal oxides. For example, the composite may include two or more types (kinds) of first metal oxides, and two or more types (kinds) of second metal oxides.

The content (*e.g.*, amount) of the composite and the at least one of milling product thereof included in the composite cathode active material may be 3 wt% or less, 2 wt% or less, 1 wt% or less, 0.5 wt% or less, 0.2 wt% or less, with respect to the total weight of the composite cathode active material. The content (*e.g.*, amount) of the composite and the at least one of milling product thereof may be about 0.01 wt% to about 3 wt%, from about 0.01 wt% to about 1 wt%, from about 0.01 wt% to about 0.7 wt%, from about 0.01 wt% to about 0.5 wt%, from about 0.01 wt% to about 0.2 wt%, from about 0.01 wt% to about 0.1 wt%, or from about 0.03 wt% to about 0.07 wt%, with respect to the total weight of the composite cathode active material. As the composite cathode active material includes the composite and the at least one of milling products of the composite in an amount in the above ranges, cycling performance of a lithium battery including the composite cathode active material may further improve.

At least one of (*e.g.*, at least one selected from) the first metal oxide and/or the second metal oxide included in the composite may have an average particle diameter of about 1 nm to about 1 μm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. As the first metal oxide and/or the second metal oxide have a particle diameter in the above nano-size ranges, the first metal oxide and/or the second metal oxide may be more uniformly distributed in the matrix of the first carbon-based material of the composite. Accordingly, the composite may be substantially uniformly coated on the core without agglomeration, and form a shell. In one or more embodiments, as the first metal oxide and/or the second metal oxide have a particle diameter in the above ranges, the first metal oxide and/or the second metal oxide may be more uniformly (substantially more uniformly) disposed on the core. Accordingly, as the first metal oxide and/or the second metal oxide are uniformly (substantially uniformly) disposed on the core, suitable withstand voltage properties may be more effectively achieved.

Average particle diameters of the first metal oxide and the second metal oxide may be measured by a measurement device that utilizes a laser diffraction technique or a dynamic light scattering technique. The average particle diameter may be measured utilizing, for example, a laser scattering particle size distribution system (*e.g.*, LA-920 Horiba), and the average particle diameter may be a value of the median particle diameter (D50) at a cumulative volume of 50 % from the smallest particle based on volume in a cumulative particle distribution.

The uniformity (substantial uniformity) of at least one of (*e.g.*, at least one selected from) the first metal oxide and/or the second metal oxide included in the composite may have a deviation of 3% or less, 2% or less, or 1% or less. The uniformity may be measured, for example, by XPS. Accordingly, within the composite, at least one of (*e.g.*, at least one selected from) the first metal oxide and/or the second metal oxide may be substantially uniformly distributed with a deviation of 3% or less, 2% or less, or 1% or less.

For example, the first carbon-based material included in the composite may have a branched structure, and at least one metal oxide of (*e.g.*, at least one selected from) the first metal oxide and/or the second metal oxide may be distributed in the branched structure of the first carbon-based material. The branched structure of the first carbon-based material may include, for example, a plurality of first carbon-based material particles in contact with one another. By having such a branched structure, the carbon-based material may provide one or more suitable conduction paths.

The first carbon-based material included in the composite may be, for example, graphene. For example, the graphene may have a branched structure, and at least one metal oxide of (*e.g.*, at least one metal oxide selected from) the first metal oxide and/or the second metal oxide may be distributed within the branched structure of the graphene. The branched structure of the graphene may include, for example, a plurality of graphene particles in contact with one another. By having such a branched structure, the graphene may provide one or more suitable conduction paths.

The first carbon-based material included in the composite may have, for example, a spherical structure, and at least one metal oxide of (*e.g.*, at least one selected from) the first metal oxide and/or the second metal oxide may be distributed within the spherical structure. The spherical structure of the first carbon-based material may have a size of about 50 nm to about 300 nm. A plurality of the first carbon-based material having a spherical structure may be provided. As the first carbon-based material has a spherical structure, the composite may have a secure or substantially secure structure.

The first carbon-based material included in the composite may be, for example, graphene. For example, the graphene may have a spherical structure, and at least one metal oxide of (*e.g.*, at least one metal oxide selected from) the first metal oxide and/or the second metal oxide may be distributed within the spherical structure. The spherical structure of the graphene may have a size of about 50 nm to about 300 nm. A plurality of graphene particles having a spherical structure may be provided. As the graphene (*e.g.*, graphene particles) has a spherical structure, the composite may have a secure or substantially secure structure.

The first carbon-based material included in the composite may have, for example, a spiral structure in which a plurality of spherical structures are connected, and at least one metal oxide of (*e.g.*, at least one metal oxide selected from) the first metal oxide and/or the second metal oxide may be distributed within the spherical structures of the spiral structure. The spiral structure of the first carbon-based material may have a size of about 500 nm to about 100 $\mu$m. As the first carbon-based material has a spiral structure, the composite may have a secure or substantially secure structure.

The first carbon-based material included in the composite may be, for example, graphene. The graphene may have, for example, a spiral structure in which a plurality of spherical structures are connected, and at least one metal oxide of (*e.g.*, at least one selected from) the first metal oxide and/or the second metal oxide may be distributed within the spherical structures of the spiral structure. The spiral structure of the graphene may have a size of about 500 nm to about 100 $\mu$m. As the graphene has a spiral structure, the composite may have a secure or substantially secure structure.

The first carbon-based material included in the composite may have, for example, a cluster structure in which a plurality of spherical structures are agglomerated, and at least one metal oxide of (*e.g.*, at least one metal oxide selected from) the first metal oxide and/or the second metal oxide may be distributed within the spherical structures of the cluster structure. The cluster structure of the first carbon-based material may have a size of about 0.5 mm to about 10 cm. As the first carbon-based material has a cluster structure, the composite may have a secure structure.

The first carbon-based material included in the composite may be, for example, graphene. The graphene may have, for example, a cluster structure in which a plurality of spherical structures are agglomerated, and at least one metal oxide of (*e.g.*, at least one metal oxide selected from) the first metal oxide and/or the second metal oxide may be distributed within the spherical structures of the cluster structure. The cluster structure of the graphene may have a size of about 0.5 mm to about 10 cm. As the graphene has a cluster structure, the composite may have a secure or substantially secure structure.

The composite may have, for example, a crumpled faceted-ball structure, and at least one of (*e.g.*, at least one selected from) the first metal oxide and/or the second metal oxide may be distributed inside the structure or on the surface of the structure. As the composite is such a faceted-ball structure, the composite may be easily applied on the surface irregularities of the core.

The composite may be or have a planar structure, and at least one of (*e.g.*, at least one selected from) the first metal oxide and/or the second metal oxide may be distributed inside the structure or on the surface of the structure. As the composite has a two-dimensional planar structure, the composite may be easily applied on the surface irregularities of the core.

The first carbon-based material included in the composite may extend from the first metal oxide by a distance of 10 nm or less, and may include at least 1 to 20 carbon-based material layers. For example, as a plurality of first carbon-based material layers are laminated, the first carbon-based material having a total thickness of 12 nm or less may be placed on the first metal oxide. For example, the total thickness of the first carbon-based material may be about 0.6 nm to about 12 nm.

The first carbon-based material included in the composite may be, for example, graphene. The graphene may extend from the first metal oxide by a distance of 10 nm or less, and may include at least 1 to 20 graphene layers. For example, as a plurality of graphene layers are laminated, graphene having a total thickness of 12 nm or less may be placed on the first metal oxide. For example, the total thickness of the graphene may be about 0.6 nm to about 12 nm.

A cathode according to one or more embodiments may include the above-described composite cathode active material. As the cathode includes the above-described composite cathode active material, an improvement in cycling performance and reduction of internal resistance may be achieved.

The cathode may be prepared by the following example method, but preparation methods thereof are not limited to this method, and the method may be adjusted according to desired and/or required conditions.

First, a cathode active material composition may be prepared by mixing the above-described composite cathode active material, a conductive material, a binder, and a solvent. The prepared cathode active material composition may be directly applied and dried on an aluminum current collector to form a cathode plate provided with a cathode active material layer. In one or more embodiments, a film obtained by casting the cathode active material composition on a separate support and then separating the composition from the support may be laminated on the aluminum current collector to form a cathode plate provided with a cathode active material layer.

As the conductive material, carbon black, graphite fine particles, natural graphite, artificial graphite, acetylene black, Ketjenblack, carbon fiber; carbon nanotubes; metal powder, metal fiber or metal tubes (such as copper, nickel, aluminum, and silver); or conductive polymers (such as polyphenylene derivatives) may be utilized, but the present disclosure is not limited thereto. Any suitable conductive material available in the art may be utilized.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized, but the present disclosure is not limited thereto. Any suitable binder in the art may be utilized. As the solvent, N-methylpyrrolidone (NMP), acetone, and/or water may be utilized, but the present disclosure is not limited thereto. Any suitable solvent available in the art may be utilized.

It is also possible to form pores in the electrode plate by further adding a plasticizer or a pore former to the cathode active material composition.

The contents of the composite cathode active material, conductive material, binder, and solvent utilized in the cathode may be at levels generally utilized in lithium batteries. Depending on the use and configuration of the lithium battery, one or more of the conductive material, the binder, and/or the solvent may not be provided.

The content (*e.g.*, amount) of the binder included in the cathode may be about 0.1 wt% to about 10 wt%, or about 0.1 wt% to about 5 wt%, based on the total weight of the cathode active material layer. The content (*e.g.*, amount) of the composite cathode active material included in the cathode may be about 90 wt% to about 99 wt% or about 95 wt% to about 99 wt%, based on the total weight of the cathode active material layer.

A cathode according to one or more embodiments may further include a third carbon-based material, and the third carbon-based material may include carbon nanofibers, carbon nanotubes, or a combination thereof.

The cathode may further include a solid electrolyte. The solid electrolyte may be an oxide-based solid electrolyte, a sulfide-based solid electrolyte, a polymer solid electrolyte, or a combination thereof. The content (*e.g.*, amount) of the solid electrolyte may be about 80 parts by weight to 120 parts by weight, based on 100 parts by weight of the composite cathode active material.

Further, the cathode may additionally include a generally available cathode active material other than the above-described composite cathode active material.

As the generally available cathode active material, any suitable lithium-containing metal oxide in the art may be utilized without limitation. For example, at least one of the composite oxides of lithium and a metal of (*e.g.*, a metal selected from) cobalt, manganese, nickel, and/or a combination thereof may be utilized as the lithium-containing metal oxide. For example, the lithium-containing metal oxide may be represented by any one of (*e.g.*, selected from among) the following formulae: $Li_aA_{1-b}B_bD_2$ (in the formula, $0.90 \leq a \leq 1$ and $0 \leq b \leq 0.5$); $Li_aE_{1-b}B_bO_{2-c}D_c$ (in the formula, $0.90 \leq a \leq 1$, $0 \leq b \leq 0.5$, and $0 \leq c \leq 0.05$); $LiE_{2-b}B_bO_{4-c}D_c$ (in the formula, $0 \leq b \leq 0.5$ and $0 \leq c \leq 0.05$); $Li_aNi_{1-b-c}Co_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_bE_cG_dO_2$ (in the formula, $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (in the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1$ and $0.001 \leq b \leq 0.1$); $Li_aCoG_bO_2$ (in the formula, $0.90 \leq a \leq 1$ and $0.001 \leq b \leq 0.1$); $Li_aMnG_bO_2$ (in the formula, $0.90 \leq a \leq 1$ and $0.001 \leq b \leq 0.1$); $Li_aMn_2G_bO_4$ (in the formula, $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and/or $LiFePO_4$.

In the Formulae representing the above-described compounds, A may be nickel (Ni), cobalt (Co), manganese (Mn), or a combination thereof; B may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be Co, Mn, or a combination thereof; F may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I may be Cr, V, Fe, Sc, yttrium (Y), or a combination thereof; and J may be V, Cr, Mn, Co, Ni, copper (Cu), or a combination thereof.

A coating layer may be provided on the surface of the above-described compound, and a compound with such a coating layer, or a mixture of the above-described compound and the compound with a coating layer compound may be utilized. The coating layer provided on the surface of the above-described compound may include a coating element compound, such as an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. The coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The method of forming the coating layer may be selected within a range that does not adversely affect the physical properties of the cathode active material. The coating method may be, for example, spray coating, a dipping method, and/or the like. A detailed description of the coating method may not be provided as it may be well understood by those in the art.

A lithium battery according to one or more embodiments employs a cathode including the above-described composite cathode active material.

As the lithium battery employs a cathode including the above-described composite cathode active material, an all-solid secondary battery with improved lifetime and capacity characteristics may be provided.

Hereinafter, an all-solid secondary battery according to one or more embodiments is described in greater detail.

**All-Solid Secondary Battery**

An all-solid secondary battery according to one or more embodiments may include a cathode layer; an anode layer; and a solid electrolyte layer disposed between the cathode layer and the anode layer, wherein the cathode layer may include a cathode current collector and a cathode active material layer disposed on one side or both sides of the cathode current collector, the cathode active material layer may include a lithium sulfide-based cathode active material, and the lithium-containing sulfide-based cathode active material may include $Li_2S_n$ (n≥1), a $Li_2S_n$ (n≥1)-containing composite, or a combination thereof. For example, $Li_2S_n$ (n≥1) may contain $Li_2S$. The anode layer may include an anode current collector and a first anode active material layer disposed on one side of the anode current collector, wherein the ratio (B/A) of initial charge capacity (B) of the first anode active material layer to initial charge capacity (A) of the cathode active material layer may be about 0.005 to about 0.45, the initial charge capacity of the cathode active material layer may be determined at a maximum charging voltage vs. $Li/Li^+$ from a $1^{st}$ open circuit voltage, and the initial charge capacity of the anode active material layer may be determined at 0.01 V vs. $Li/Li^+$ from a $2^{nd}$ open circuit voltage.

The all-solid secondary battery may include, as a lithium source, such as a lithium-containing sulfide-based cathode active material, instead of lithium metal. Accordingly, lithium sources such as lithium metal, may not be provided in the anode layer. Because the volume of the anode layer is reduced, the energy density of the all-solid secondary battery may be improved.

The all-solid secondary battery may include, as a cathode active material, a lithium-containing sulfide-based cathode active material. Accordingly, blocking of ion and/or electron transport paths due to a volume expansion of a lithium-free sulfide-based cathode active material, *e.g.*, sulfur (S), during initial discharging may be prevented or reduced. By preventing or reducing such blocking of ion and/or electron transport paths, cycling performance of the all-solid secondary battery may be improved. An all-solid secondary battery according to one or more embodiments does not show an issue related to dissolution of lithium polysulfides in electrolyte and contains no flammable organic solvent, and therefore may be able to ensure safety.

The all-solid secondary battery may include a first anode active material layer having an initial charge capacity in a range of about 0.005 to about 0.45 relative to the initial charge capacity of the cathode active material layer. As the first anode active material layer has such a small initial charge capacity within the above range, the anode layer may effectively accommodate a volume change of the cathode layer during cycling. As a result, the overall volume change of the all-solid secondary battery may be suppressed or reduced during cycling. Because degradations, such as crack formation due to a rapid volume change during cycling of the all-solid secondary battery, are prevented or reduced, the occurrence of a short-circuit in the all-solid secondary battery may be prevented or reduced and cycling performance of the all-solid secondary battery may be improved.

Inclusion of the solid electrolyte layer in the all-solid secondary battery may prevent or reduce the migration of polysulfides to the anode layer that occurs during charging and discharging of the lithium-containing sulfide-based cathode active material. As a result, side reactions between polysulfides and an anode active material may be inhibited or reduced.

As an inactive member is disposed on one side surface of the cathode layer, crack formation in the solid electrolyte layer that occurs during pressing and/or charging and discharging of an all-solid secondary battery may be suppressed or reduced. Therefore, crack formation in the solid electrolyte layer during the manufacture and/or charging and discharging of an all-solid secondary battery may be inhibited or reduced, and as a result, a short circuit in the all-solid secondary battery may be prevented or reduced. As a result, short-circuits in the all-solid secondary battery may be prevented or reduced and lifetime characteristics of the all-solid secondary battery may be improved.

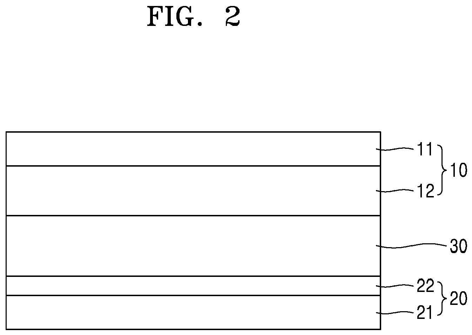

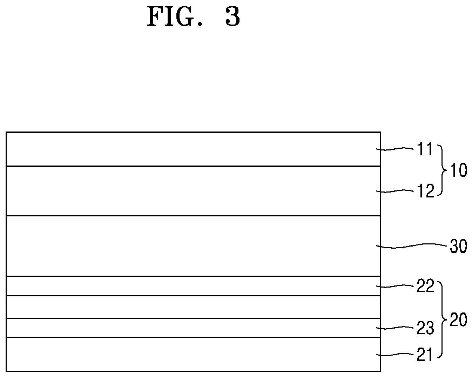

Referring to FIGs. 2 and 3, an all-solid secondary battery 1 may include a cathode layer 10; an anode layer 20; and a solid electrolyte layer 30 between the cathode layer 10 and the anode layer 20, wherein the cathode layer 10 includes a cathode current collector 11 and a cathode active material layer 12 disposed on one or both sides of a cathode current collector 11, and the cathode active material layer 12 includes a composite cathode active material according to one or more embodiments as described herein.

In the composite cathode active material according to one or more embodiments, the sulfide-based cathode active material includes $Li_2S$, a $Li_2S$-containing composite, or a combination thereof.

**Cathode Layer**

**Cathode Layer: Cathode Active Material**

Referring to FIGs. 2 and 3, the cathode active material layer 12 may include, for example, a cathode active material and a solid electrolyte. The solid electrolyte included in the cathode active material layer 12 may be similar to or different from a solid electrolyte included in the solid electrolyte layer 30. For more details of the solid electrolyte, the description of the solid electrolyte layer 30 may be referred to.

The cathode active material may include a lithium-containing sulfide-based cathode active material. The lithium-containing sulfide-based cathode active material may be, for example, an electrode material which is a sulfur-based cathode active material with lithium added thereto. The sulfur-based cathode active material may include, for example, a sulfur-based material, a sulfur-based material-containing composite, or a combination thereof. The sulfur-based material may be, for example, inorganic sulfur, $Li_2S_n$ (n>1), a disulfide compound, an organic sulfur compound, a carbon-sulfur polymer, or a combination thereof. The sulfur-based material-containing composite may be, for example, inorganic sulfur, $Li_2S_n$ (n≥1), a disulfide compound, an organic sulfur compound, a carbon-sulfur polymer, or a composite containing a combination thereof. The sulfur-based material-containing composite may include, for example, a composite of a sulfur-based material and carbon, a composite of a sulfur-based material, carbon, and a solid electrolyte, a composite of a sulfur-based material and a solid electrolyte, a composite of a sulfur-based material and a metal carbide, a composite of a sulfur-based material, carbon, and a metal carbide, a composite of a sulfur-based material and a metal nitride, a composite of a sulfur-based material, carbon, and a metal nitride, or a combination thereof. Because a lithium-containing sulfide-based cathode active material provides a higher gravimetric discharge capacity than an oxide-based cathode active material, an all-solid secondary battery including the lithium-containing sulfide-based cathode active material may have an improved gravimetric energy density.

The lithium-containing sulfide-based cathode active material may include, for example, $Li_2S$, a $Li_2S$-containing composite, or a combination thereof. By including a $Li_2S$, a $Li_2S$-containing composite, or a combination thereof as the lithium-containing sulfide-based cathode active material, lithium metal may not be provided during manufacturing of an all-solid secondary battery. Lithium metal, due to its having high reactivity and high ductility, may decrease the mass productivity of battery manufacturing. Accordingly, the mass productivity of an all-solid secondary battery according to embodiments of the present disclosure may improve. As lithium metal is omitted from an anode layer, the volume of the anode layer may decrease, the volumetric energy density of the all-solid secondary battery may improve, and the all-solid secondary battery may be configured with a simpler structure.

A lithium-containing sulfide-based cathode active material (e.g., $Li_2S$), for example, decreases in volume through delithiation during initial charging, and during the subsequent discharging, increases again in volume through lithiation. Therefore, because the lithium-containing sulfide-based cathode active material undergoes a volume change while ion and/or electron transport paths by a conductive material, etc. arranged around the lithium-containing sulfide-based cathode active material are maintained, the likelihood of the ion and/or electron transport paths being blocked may be low or reduced. In contrast, a sulfur-based cathode active material (e.g., S) not containing lithium, for example, increases in volume through lithiation during initial discharging, and during the subsequent charging, decreases in volume through delithiation. Therefore, because the initial ion and/or electron transport paths by a conductive material, etc. arranged around the sulfur-based cathode active material may collapse due to an initial volume expansion of the sulfur-based cathode active material, the likelihood of the ion and/or electron transport paths being blocked may be high.

The lithium-containing sulfide-based cathode active material may have an average particle diameter (D50) of, for example, about 0.1 nm to about 10 $\mu$m, about 1 nm to about 50 $\mu$m, about 10 nm to about 50 $\mu$m, or about 10 nm to about 1 $\mu$m. As the lithium-containing sulfide-based cathode active material has an average particle diameter in the above ranges, cycling performance of an all-solid secondary battery including the lithium-containing sulfide-based cathode active material may further improve. The $Li_2S$-containing composite may be, for example, a composite of $Li_2S$ and a conductive material. For example, the conductive material may be an ionically conductive material, an electronically conductive material, or a combination thereof.

If (e.g., when) a solid electrolyte (e.g., a sulfide-based solid electrolyte) is included in the composite cathode active material, the solid electrolyte may have an average particle diameter of about 0.1 nm to about 10 $\mu$m, about 1 nm to about 8 $\mu$m, about 10 nm to about 5 $\mu$m, or about 100 nm to about 3 $\mu$m.

A composite, which includes the lithium-containing sulfide-based cathode active material according to one or more embodiments and the first carbon-based material, or which includes the lithium-containing sulfide-based cathode active material, the first carbon-based material, and the solid electrolyte, may have an average particle diameter of about 0.1 $\mu$m to about 50 $\mu$m, or about 1 $\mu$m to about 10 $\mu$m.

The electronically conductive material may have an electronic conductivity of, for example, $1.0 \times 10^3$ S/m or more, $1.0 \times 10^4$ S/m or more, or $1.0 \times 10^5$ S/m or more. The form of the electronically conductive material may be, for example, a particulate electronically conductive material, a plate-shaped electronically conductive material, a rodlike electronically conductive material, or a combination thereof, but the present disclosure is not necessarily limited to the aforementioned examples. For example, the electronically conductive material may be carbon, a metal powder, a metal compound, and/or the like. If (e.g., when) carbon is included as the electronically conductive material, due to the high electronic conductivity and light weight of carbon, an all-solid secondary battery with high volumetric energy density may be realized. The electronically conductive material may have pores. By having pores therein, the electronically conductive material may accommodate $Li_2S$ in the pores, which may lead to an increased contact surface between $Li_2S$ and the electronically conductive material and an increased specific surface area of $Li_2S$. For example, the pores may have a pore capacity of about 0.1 cc/g to about 20.0 cc/g, about 0.5 cc/g to about 10 cc/g, or about 0.5 cc/g to about 5 cc/g.

For example, the pores may have an average pore diameter of about 1 nm to about 100 nm, about 1 nm to about 50 nm, or about 1 nm to about 20 nm. The electronically conductive material having pores may have a BET specific surface area of about 200 m$^2$/g to about 4,500 m$^2$/g when the average pore diameter is 15 nm or less; and a BET specific surface area of about 100 m$^2$/g to 2,500 m$^2$/g when the average pore diameter is greater than 15 nm. The BET specific surface area, pore diameter, pore capacity, and average pore diameter may be obtained utilizing, for example, a nitrogen adsorption method.

For example, the ionically conductive material may have an ionic conductivity of $1.0 \times 10^{-5}$ S/m or more, $1.0 \times 10^{-4}$ S/m or more, or $1.0 \times 10^{-3}$ S/m or more. The ionically conductive material may have pores. By having pores therein, the ionically conductive material may accommodate Li$_2$S in the pores, which may lead to an increased contact surface between Li$_2$S and the ionically conductive material and an increase in the specific surface area of Li$_2$S. The form of the ionically conductive material may be, for example, a particulate ionically conductive material, a plate-shaped ionically conductive material, a rodlike ionically conductive material, or a combination thereof, but the present disclosure is not necessarily limited to the aforementioned examples. The ionically conductive material may be, for example, a sulfide-based solid electrolyte, an oxide-based solid electrolyte, and/or the like. If (e.g., when) a sulfide-based solid electrolyte is included as the ionically conductive material, due to the high ionic conductivity of the sulfide-based solid electrolyte and its moldability into one or more suitable forms, an all-solid secondary battery having a large capacity may be realized.

Examples of the Li$_2$S-containing composite may include a Li$_2$S-carbon composite, a Li$_2$S-carbon-solid electrolyte composite, a Li$_2$S-solid electrolyte composite, a Li$_2$S-metal carbide composite, a Li$_2$S-carbon-metal carbide composite, and a Li$_2$S-metal nitride composite, a Li$_2$S-carbon-metal nitride composite, or a combination thereof.

The Li$_2$S-carbon composite may include a carbon. The carbon may be, for example, any carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. The carbon nanostructure may be, for example, a carbon nanotube, a carbon nanofiber, a carbon nanotube, a carbon nanorod, graphene, or a combination thereof. The carbon may be, for example, porous carbon or non-porous carbon. The porous carbon may contain, for example, periodic and regular two-dimensional or three-dimensional pores. Examples of the porous carbon may include carbon black, such as Ketjenblack, acetylene black, Denka black, thermal black, and channel black, and graphite, activated carbon, or a combination thereof. The type or kind of the carbon may be a particulate form, a sheet form, a flake shape, and/or the like, but the present disclosure is not limited to the aforementioned examples, and may utilize any suitable material available as carbon in the art. The Li$_2$S-carbon composite may be prepared by methods including, but not limited to, a dry method, a wet method, or a combination thereof. Further, suitable methods available in the art for preparing Li$_2$S-carbon composites include milling, heat treatment, deposition, and/or the like, but the present disclosure is not limited to the aforementioned methods, and any suitable method available in the art may be utilized.

The Li$_2$S-carbon-solid electrolyte composite may include a carbon and a solid electrolyte. For more details of the carbon, the description of the Li$_2$S-carbon composite above may be referred to. The solid electrolyte may be any suitable material available as an ionically conductive material in the art. The solid electrolyte may be, for example, an inorganic solid electrolyte. Examples of the solid electrolyte may include a crystalline solid electrolyte, an amorphous solid electrolyte, or a combination thereof. Examples of the solid electrolyte may include a sulfide-based solid electrolyte, an oxide-based solid electrolyte, a polymer solid electrolyte, or a combination thereof. The sulfide-based solid electrolyte may contain, for example, Li, S, and P, and may optionally further contain a halogen element. The sulfide-based solid electrolyte may be selected from sulfide-based solid electrolytes available for use in a solid electrolyte layer. The sulfide-based solid electrolyte may have an ionic conductivity of $1 \times 10^{-5}$ S/cm or more at room temperature, for example. The oxide-based solid electrolyte may include, for example, Li, O, and a transition metal element, and may optionally further include other elements. For example, the oxide-based solid electrolyte may be a solid electrolyte having an ionic conductivity of $1 \times 10^{-5}$ S/cm or more at room temperature. The oxide-based solid electrolyte may be selected from oxide-based solid electrolytes available for use in a solid electrolyte layer.

The Li$_2$S-solid electrolyte composite may include a solid electrolyte. For more details of the solid electrolyte, the description of the Li$_2$S-carbon-solid electrolyte composite above may be referred to.

The Li$_2$S-metal carbide composite may include a metal carbide. The metal carbide may be, for example, a two-dimensional metal carbide. The two-dimensional metal carbide may be represented by, for example, $M_{n+1}C_nT_x$ (M is a transition metal, T is a terminal group, T is O, OH and/or F, n = 1, 2, or 3, and X is the number of terminal groups). The two-dimensional metal carbide may be, for example, Ti$_2$CT$_x$, (Ti$_{0.5}$, Nb$_{0.5}$)$_2$CT$_x$, Nb$_2$CT$_x$, V$_2$CT$_x$, Ti$_3$C$_2$T$_x$, (V$_{0.5}$, Cr$_{0.5}$)$_3$C$_2$T$_x$, Ti$_3$CNT$_x$, Ta$_4$C$_3$T$_x$, Nb$_4$C$_3$T$_x$, or a combination thereof. The surface of the two-dimensional metal carbide may be terminated with O, OH, and/or F.

The Li$_2$S-carbon-metal carbide composite may include a carbon and a metal carbide. For more details of the carbon, the description of the carbon of the composite of Li$_2$S and carbon may be referred to. For more details of the metal carbide, the description of the metal carbide of the composite of $Li_2S$ and metal carbide may be referred to.

The $Li_2S$-metal nitride composite may include a metal nitride. The metal nitride may be, for example, a two-dimensional metal nitride. The two-dimensional metal nitride may be represented by, for example, $M_{n+1}N_nT_x$ (M is a transition metal, T is a terminal group, T is O, OH and/or F, n = 1, 2, or 3, and X is the number of terminal groups). The surface of the two-dimensional metal nitride may be terminated with O, OH, and/or F.

The $Li_2S$-carbon-metal nitride composite may include a carbon and a metal nitride. For more details of the carbon, the description of the $Li_2S$-carbon composite above may be referred to. For more details of the metal nitride, the description of the $Li_2S$-metal nitride composite above may be referred to.

The content (*e.g.*, amount) of the sulfide-based cathode active material included in a cathode active material layer 12 may be, for example, about 10 wt% to about 90 wt%, about 10 wt% to about 80 wt%, about 10 wt% to about 70 wt%, about 10 wt% to about 60 wt%, or about 10 wt% to about 50 wt%, with respect to the total weight of the cathode active material layer 12.

The cathode active material layer 12 may further include, for example, a sulfide-based compound distinguished from $Li_2S$. The sulfide-based compound may be, for example, a compound including sulfur and a metal element other than Li. The sulfide-based compound may be, for example, a compound including sulfur and a metal element that has an atomic weight of 10 or more and belongs to Groups 1 to 14 of the Periodic Table of Elements. The sulfide-based compound may be, for example, $FeS_2$, $VS_2$, NaS, MnS, FeS, NiS, CuS, or a combination thereof. Due to such a sulfide-based compound being included in the cathode active material layer, cycling performance of an all-solid secondary battery may be further improved. The content (*e.g.*, amount) of the sulfide-based compound distinguished from $Li_2S$ included in the cathode active material layer 12 may be 10 wt% or less, 5 wt% or less, 3 wt% or less, or 1 wt% or less with respect to the total weight of the cathode active material layer 12.

**Cathode Layer: Solid Electrolyte**

The cathode active material layer 12 may further include, for example, a solid electrolyte. The solid electrolyte may be a sulfide-based solid electrolyte, for example. The solid electrolyte included in the cathode layer 10 may be identical to or different from a solid electrolyte included in a solid electrolyte layer 30. For more details of the solid electrolyte, the description of the solid electrolyte layer 30 may be referred to.

The solid electrolyte included in the cathode active material layer 12 may have a smaller median particle diameter D50 than that of the solid electrolyte included in the solid electrolyte layer 30. For example, the median particle diameter D50 of the solid electrolyte included in the cathode active material layer 12 may be 90% or less, 80% or less, 70% or less, 60% or less, 50% or less, 40% or less, 30% or less, or 20% or less, relative to the median particle diameter D50 of the solid electrolyte included in the solid electrolyte layer 30. The D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

The content (*e.g.*, amount) of the solid electrolyte included in the cathode active material layer 12 may be, for example, about 1 wt% to about 40 wt%, about 1 wt% to about 30 wt%, about 1 wt% to about 20 wt%, or about 1 wt% to about 10 wt%, with respect to the total weight of the cathode active material layer 12.

**Cathode Layer: Conductive Material**

The cathode active material layer 12 may further include a conductive material. The conductive material may be, for example, a carbon-based conductive material, a metal-based conductive material, or a combination thereof. Examples of the carbon-based conductive material may include graphite, carbon black, acetylene black, Ketjenblack, carbon fibers, and a combination thereof. However, the carbon-based conductive material is not limited to the aforementioned examples and may be any suitable material available as a carbon-based conductive material in the art. The metal-based conductive material may be metal powder, metal fibers, or a combination thereof, but the present disclosure is not limited thereto and may include any suitable metal-based conductive material available in the art. For example, the content (*e.g.*, amount) of the conductive material included in the cathode active material layer 12 may be about 1 wt% to about 30 wt%, about 1 wt% to about 20 wt%, about 1 wt% to about 10 wt%, with respect to the total weight of the cathode active material layer 12.

**Cathode Layer: Binder**

The cathode active material layer 12 may further include a binder. Examples of the binder may include styrene butadiene rubber (SBR), polytetrafluoroethylene, polyvinylidene fluoride, polyethylene, and/or the like, but the present disclosure is not limited to the aforementioned examples, and any suitable material available as a binder in the art may be utilized. The content (*e.g.*, amount) of the binder included in the cathode active material layer 12 may be, for example, about 1 wt% to about 10 wt% with respect to the total weight of the cathode active material layer 12. In one or more embodiments, the binder may not be provided.

**Cathode Layer: Other Additives**

The cathode active material layer 12 may further include, for example, additives such as a filler, a coating agent, a dispersing agent, and/or an ion-conducting agent, in addition to the cathode active material, solid electrolyte, binder, and conductive material described above.

For the filler, coating agent, dispersing agent, and ion-conducting agent that may be included in the cathode active material layer 12, any suitable material generally utilized in electrodes of all-solid secondary batteries may be utilized.

**Cathode Layer: Cathode Current Collector**

For example, the cathode current collector 11 may utilize a plate, a foil, and/or the like, composed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In one or more embodiments, the cathode current collector 11 may not be provided. The cathode current collector 11 may have a thickness of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

In one or more embodiments, the cathode current collector 11 may include, for example, a base film and a metal layer disposed on one side or both (*e.g.*, opposite) sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. Due to the inclusion of a thermoplastic polymer in the base film, the base film may liquify in the event of a short circuit, thus preventing or substantially preventing a rapid increase in electrical current. For example, the polymer may be an insulator. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The cathode current collector 11 may further include a metal chip and/or a lead-tab. For more details of the base film, metal layer, metal chip, and lead-tab of the cathode current collector 11, reference may be made to the description of an anode current collector 21 described in more detail below. As the cathode current collector 11 has such a structure, the weight of the electrode may be reduced and as a result, energy density may improve.

**Anode Layer**

**Anode Layer: Anode Active Material**

Referring to FIGs. 2 and 3, an anode layer 20 may include a first anode active material layer 22. The first anode active material layer 22 may include, for example, an anode active material and a binder.

The anode active material included in the first anode active material layer 22 may be, for example, an anode material capable of forming an alloy or a compound with lithium.

The anode active material included in the first anode active material layer 22 may have, for example, a particulate form. The anode active material having a particulate form may have an average particle diameter of, for example, 4 $\mu$m or less, 3 $\mu$m or less, 2 $\mu$m or less, 1 $\mu$m or less, 500 nm or less, 300 nm or less, or 100 nm or less. For example, the anode active material having a particulate form may have an average particle diameter of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. The anode active material having an average particle diameter within the above ranges may facilitate reversible absorption and/or desorption of lithium during charging/discharging. The average particle diameter of the anode active material may be, for example, a median particle diameter (D50) as measured by a laser-type or kind particle size distribution analyzer.

The anode active material included in the first anode active material layer 22 may include, for example, at least one of (*e.g.*, at least one selected from) a carbon-based anode active material and/or a metal or metalloid anode active material.

The carbon-based anode active material may include, for example, amorphous carbon, crystalline carbon, porous carbon, or a combination thereof.

The carbon-based anode active material may be, for example, an amorphous carbon. Examples of the amorphous carbon may include carbon black (CB), acetylene black (AB), furnace black (FB), Ketjenblack (KB), graphene, and/or the like. However, the carbon-based anode active material is not necessarily limited to the aforementioned examples, and may be any suitable material categorized as amorphous carbon in the art. Amorphous carbon is carbon with no crystalline structure or an extremely low degree of crystallinity and as such, can be distinguished from crystalline carbon or graphitic carbon.

The carbon-based anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. The BET specific surface of the porous carbon may be, for example, about 100 $m^2$/g to about 3,000 $m^2$/g.

The metal or metalloid anode active material may include at least one of (e.g., at least one selected from) gold (Au), platinum (Pt), palladium (Pd), silicon (Si), silver (Ag), aluminum (Al), bismuth (Bi), tin (Sn), indium (In), and/or zinc (Zn), but the present disclosure is not necessarily limited to the aforementioned materials. The metal or metalloid anode active material may be any suitable metal anode active material or metalloid anode active material available in the art that can form an alloy or a compound with lithium. For example, nickel (Ni) does not form an alloy with lithium and is therefore not regarded as a metal anode active material.

The first anode active material layer 22 may include one of such anode active materials, or may include a mixture of multiple different anode active materials. For example, the first anode active material layer 22 may include amorphous carbon alone or may include one or more of (e.g., one or more selected from) gold (Au), platinum (Pt), palladium (Pd), silicon (Si), silver (Ag), aluminum (Al), bismuth (Bi), tin (Sn), and/or zinc (Zn). In one or more embodiments, the first anode active material layer 22 may include a mixture of amorphous carbon with at least one of (e.g., at least one selected from) gold (Au), platinum (Pt), palladium (Pd), silicon (Si), silver (Ag), aluminum (Al), bismuth (Bi), tin (Sn), and/or zinc (Zn). A mixing ratio of amorphous carbon to the metal(s) described herein, such as gold (Au), in such a mixture may be about 99:1 to about 1:99, about 10:1 to about 1:2, about 5:1 to about 1:1, or about 4:1 to about 2:1 in weight ratio, but the present disclosure is not necessarily limited thereto, and the mixing ratio may be selected according to desired and/or required characteristics of the all-solid secondary battery 1. The anode active material having the above compositions may further improve cycling performance of the all-solid secondary battery 1.

The anode active material included in the first anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In one or more embodiments, the metalloid may be a semiconductor. The content (e.g., amount) of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. As the content (e.g., amount) of the second particle is within the above ranges, cycling performance of the all-solid secondary battery 1 may further improve.

**Anode Layer: Binder**

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material available as a binder in the art. The binder may be composed of a single type or kind of binder, or multiple binders of different types (kinds).

By including a binder in the first anode active material layer 22, the first anode active material layer 22 may be stabilized on the anode current collector 21. In one or more embodiments, cracking in the first anode active material layer 22 may be inhibited or reduced despite volume changes and/or displacement of the first anode active material layer 22 during charging/discharging processes. For example, if (e.g., when) the first anode active material layer 22 does not contain any binder, the first anode active material layer 22 may be easily delaminated from the anode current collector 21. In an area where the anode current collector 21 is exposed as a result of delamination of the first anode active material layer 22 from the anode current collector 21, the anode current collector 21 may come in contact with the solid electrolyte layer 30, thus increasing the likelihood of a short circuit.

For example, the first anode active material layer 22 may be prepared by applying and drying a slurry having dispersed therein materials forming the first anode active material layer 22 on the anode current collector 21. By inclusion of a binder in the first anode active material layer 22, the anode active materials may be stably dispersed within the slurry. For example, when applying the slurry onto the anode current collector 21 by a screen-printing method, it may be possible to prevent or protect the screen from clogging (for example, clogging by aggregates of anode active material).

**Anode Layer: Other Additives**

The first anode active material layer 22 may further include other additives utilized in an all-solid secondary battery of the related art, such as a filler, a coating agent, a dispersing agent, an ionically conductive aid, and/or the like.

**Anode Layer: Solid Electrolyte**

The first anode active material layer 22 may further include a solid electrolyte. The solid electrolyte may be, for example, a material selected from solid electrolytes included in the solid electrolyte layer 30. The solid electrolyte included in the first anode active material layer 22 may act as a reaction site where formation of lithium metal starts, may act as a space where the formed lithium metal is stored, or may act as a route for transferring lithium ions in the first anode active material layer 22. In one or more embodiments, the solid electrolyte may not be provided.

For example, in the first anode active material layer 22, the concentration of the solid electrolyte may be high in a region adjacent to the solid electrolyte layer 30 and low in a region adjacent to the anode current collector 21. For example, the solid electrolyte in the first anode active material layer 22 may have a concentration gradient in which the concentration gradually decreases from a region adjacent to the solid electrolyte layer 30 to a region adjacent to the anode current collector 21.

**Anode Layer: First Anode Active Material Layer**

The ratio (B/A) of initial charge capacity (B) of the first anode active material layer 22 to initial charge capacity (A) of the cathode active material layer may be about 0.005 to about 0.45. The initial charge capacity of the cathode active material layer 12 may be determined at a maximum charging voltage vs. Li/Li$^+$ from a first open circuit voltage. The initial charge capacity of the first anode active material layer 22 may be determined at 0.01 V vs. Li/Li$^+$ from a second open circuit voltage.

The maximum charging voltage may be determined by the type or kind of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li$_2$S or a Li$_2$S composite may be 2.5 V vs. Li/Li$^+$. For example, the maximum charging voltage of Li$_2$S or a Li$_2$S composite may be 3.0 V vs. Li/Li$^+$. The ratio (B/A) of initial charge capacity (B) of the first anode active material layer 22 to initial charge capacity (A) of the cathode active material layer may be, for example, about 0.01 to about 0.3, about 0.01 to about 0.2, or about 0.05 to about 0.1.

The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (*e.g.*, when) multiple types (kinds) of cathode active materials are utilized, the product of charge specific density $\times$ mass may be calculated for each cathode active material, and the sum of these products may be defined as the initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (*e.g.*, when) multiple types (kinds) of anode active materials are utilized, the product of charge specific density $\times$ mass may be calculated for each anode active material, and the sum of these products may be defined as the initial charge capacity of the first anode active material layer 22. Here, the charge specific density of each of the cathode active material and the anode active material may be measured utilizing an all-solid half cell utilizing lithium metal as a counter electrode. The initial charge capacity of each of the cathode active material layer 12 and the first anode active material layer 22 may be directly measured by utilizing an all-solid half-cell at a constant current density, for example, 0.1 mA/cm$^2$. For the cathode, this measurement may be made for an operating voltage from a first open circuit voltage (OCV) to a maximum charge voltage, for example, 3.0 V (vs. Li/Li$^+$). For the anode, this measurement may be made for an operating voltage from a second OCV to 0.01 V with respect to the anode, for example, lithium metal. For example, the all-solid half cell having the cathode active material layer may be charged with a constant current of 0.1 mA/cm$^2$ to 3.0 V from the first OCV, and the all-solid half cell having the first anode active material layer may be charged with a constant current of 0.1 mA/cm$^2$ to 0.01 V from the second OCV. For example, the current density during the constant current charging may be 0.2 mA/cm$^2$ or 0.5 mA/cm$^2$. The all-solid half cell having the cathode active material layer may be charged, for example, to 2.5 V, 2.0 V, 3.5 V, or 4.0 V from the first OCV. The maximum charge voltage of the cathode active material layer may be determined according to the maximum voltage of a cell that satisfies the safety conditions described in JIS C 8712:2015 by the Japanese Standards Association, the entire content of which is hereby incorporated by reference.

If (*e.g.*, when) the initial charge capacity of the first anode active material layer 22 is excessively small, the thickness of the first anode active material layer 22 becomes extremely small, and as a result, lithium dendrites may form between the first anode active material layer 22 and the anode current collector 21 during repeated charging/discharging processes and may cause a collapse of the first anode active material layer 22, thus making it difficult to improve cycling performance of the all-solid secondary battery 1. If (*e.g.*, when) the charge capacity of the first anode active material layer 22 is excessively large, the energy density of the all-solid secondary battery 1 decreases, and the internal resistance of the all-solid secondary battery 1 by the first anode active material layer 22 increases, thus making it difficult to improve the cycling performance of the all-solid secondary battery 1.

For example, the first anode active material layer 22 may have a thickness of 50% or less, 40% or less, 30% or less, 20% or less, 10% or less, or 5% or less, with respect to the thickness of the cathode active material layer 12. For example, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, the first anode active material layer 22 may have a thickness of about 1 $\mu$m to about 20 $\mu$m, about 2 $\mu$m to about 15 $\mu$m, or about 3 $\mu$m to about 10 $\mu$m. If (e.g., when) the thickness of the first anode active material layer 22 is excessively small, lithium dendrites may form between the first anode active material layer 22 and the anode current collector 21 and may cause a collapse of the first anode active material layer 22, thus making it difficult to achieve improvement in cycling performance of the all-solid secondary battery 1. If (e.g., when) the thickness of the first anode active material layer 22 is excessively large, the energy density of the all-solid secondary battery 1 may decrease, and the internal resistance of the all-solid secondary battery 1 by the first anode active material layer 22 may increase, thus making it difficult to achieve improvement in cycling performance of the all-solid secondary battery 1. With decreasing thickness of the first anode active material layer 22, for example, the initial charge capacity of the first anode active material layer 22 may also decrease.

**Anode Layer: Second Anode Active Material Layer**

The all-solid secondary battery 1 may further include, for example, a second anode active material layer that is disposed between the anode current collector 21 and the first anode active material layer 22 after charging. The second anode active material layer may be a metal layer including lithium or a lithium alloy. The metal layer may include lithium or a lithium alloy. As such, the second anode active material layer, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but the present disclosure is not limited thereto, and may include any suitable material available as a lithium alloy in the art. The second anode active material layer may be composed of one of such alloys, or lithium, or may be composed of one or more suitable types (kinds) of such alloys. The second anode active material layer may be, for example, a plated layer. For example, the second anode active material layer may be plated between the first anode active material layer 22 and the anode current collector 21 during charging of the all-solid secondary battery 1.

The second anode active material layer is not limited to any particular thickness, but may have a thickness of, for example, about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. If (e.g., when) the thickness of the second anode active material layer is excessively small, the second anode active material layer may fail to sufficiently function as a lithium reservoir. If (e.g., when) the thickness of the second anode active material layer is excessively large, the mass and volume of the all-solid secondary battery 1 may increase, and cycling performance of the all-solid secondary battery 1 is more likely to deteriorate.

In one or more embodiments, in the all-solid secondary battery 1, the second anode active material layer may be disposed between the anode current collector 21 and the first anode active material layer 22 prior to assembly of the all-solid secondary battery 1, for example. As shown in FIG. 3, if (e.g., when) the second anode active material layer 23 is positioned between the anode current collector 21 and the first anode active material layer 22 prior to assembly of the all-solid secondary battery 1, the second anode active material layer 23, due to being a metal layer containing lithium, may act as a lithium reservoir. For example, prior to assembly of the all-solid secondary battery 1, a lithium foil may be positioned between the anode current collector 21 and the first anode active material layer 22.

If (e.g., when) the second anode active material layer 23 is to be plated by charging after assembly of the all-solid secondary battery 1, the all-solid secondary battery 1 at the time of assembly thereof does not include the second anode active material layer 23, and therefore, energy density of the all-solid secondary battery 1 increases. If (e.g., when) charging the all-solid secondary battery 1, the charging may be performed to exceed the charging capacity of the first anode active material layer 22. For example, the first anode active material layer 22 may be overcharged. At the beginning of the charging, lithium may be absorbed into the first anode active material layer 22. The anode active material included in the first anode active material layer 22 may form an alloy or a compound with lithium ions moved from the cathode layer 10. If (e.g., when) the charging is performed exceeding the capacity of the first anode active material layer 22, lithium may be plated, for example, on the back surface of the first anode active material layer 22, that is, between the anode current collector 21 and the first anode active material layer 22, and then, a metal layer corresponding to the second anode active material layer 23 may be formed by the plated lithium. The second anode active material layer 23 may be a metal layer mainly composed of lithium (i.e., metal lithium). This result may be attributed to the fact that the anode active material included in the first anode active material layer 22 includes a material that forms an alloy or compound with lithium. During discharge, lithium of the first anode active material layer 22 and the second anode active material layer 23, that is, a metal layer, is ionized and migrates toward the cathode layer 10. Therefore, lithium may be utilized as an anode active material in the all-solid secondary battery 1. In one or more embodiments, because the first anode active material layer 22 is coated on the second anode active material layer 23, the first anode active material layer 22 may function as a protective layer for the second anode active material layer 23, *e.g.*, the metal layer, while inhibiting or reducing precipitation and growth of lithium dendrites. Therefore, short circuiting and capacity fading in the all-solid secondary battery 1 may be inhibited or reduced, and consequently, cycling performance of the all-solid secondary battery 1 may improve. Further, if (*e.g.*, when) the second anode active material layer 23 is disposed by charging after assembly of the all-solid secondary battery 1, the anode layer 20, *e.g.*, the anode current collector 21, the first anode active material layer 22, and the area therebetween, are Li-free regions free of Li while the all-solid secondary battery 1 is in the initial state or a fully discharged state.

**Anode Layer: Anode Current Collector**

The anode current collector 21 may be formed of a material that does not react with lithium, that is, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming the anode current collector 21 is not necessarily limited to the aforementioned materials but may be any suitable material available as an electrode current collector in the art. The anode current collector 21 may be formed of one of the aforementioned metals, an alloy of two or more metals thereof, or a coating material. The anode current collector 21 may be, for example, a plate type or kind or a foil type or kind.

In one or more embodiments, the anode current collector 21 may include, for example, a base film and a metal layer disposed on one side or both (*e.g.*, opposite) sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. Due to inclusion of a thermoplastic polymer in the base film, the base film may liquify in the event of a short circuit and thus may prevent or reduce a rapid increase in electric current. For example, the polymer may be an insulating body. The metal layer may include, for example, copper (Cu), stainless steel, titanium (Ti), iron (Fe), cobalt (Co), nickel (Ni), or an alloy thereof. The metal layer may act as an electrochemical fuse by being disconnected in the event of an overcurrent, to thereby provide protection against short circuits. A limiting current and a peak current may be controlled or selected through controlling the thickness of the metal layer. The metal layer may be plated or deposited on the base film. As the thickness of the metal layer decreases, the limiting current and/or peak current of the anode current collector may also decrease, and therefore, the lithium battery may have improved stability during a short circuit.

A lead-tab may be added on the metal layer for external connection. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. To further secure the welding between the metal layer and the lead tab, a metal chip may be added between the metal layer and the lead tab. The metal chip may be a flake of the same material as the metal of the metal layer. For example, the metal chip may be a metal foil, a metal mesh, and/or the like. For example, the metal chip may be an aluminum foil, a copper foil, a stainless steel (SUS) foil, and/or the like. By welding the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added to a portion of the metal layer. For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If (*e.g.*, when) the base film has a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. As the base film has a melting point within the above ranges, during the process of welding the lead-tab, the base film may melt and be easily bonded to the lead-tab. To improve bonding strength between the base film and the metal layer, a surface treatment such as corona treatment may be performed on the base film. For example, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If (e.g., when) the metal layer has a thickness within the above ranges, stability of the electrode assembly may be ensured while maintaining conductivity. For example, the metal chip may have a thickness of about 2 $\mu$m to about 10 $\mu$m, about 2 $\mu$m to about 7 $\mu$m, or about 4 $\mu$m to about 6 $\mu$m. If (*e.g.*, when) the metal chip has a thickness within the above ranges, connection between the metal layer and the lead-tab may be more easily performed. As the anode current collector 521b, 522b has the above structure, the weight of the electrode may be reduced and as a result, energy density may be improved.

The all-solid secondary battery 1 may further include a thin film containing an element alloyable with lithium on one side of the anode current collector 21. The thin film may be positioned between the anode current collector 21 and the first anode active material layer 22. The thin film may include, for example, an element capable of forming an alloy with lithium. Examples of the element capable of forming an alloy with lithium may include gold, silver, zinc, tin, indium, silicon, aluminum, bismuth, and/or the like, but the present disclosure is not limited thereto, and any suitable element available in the art that is capable of forming an alloy with lithium may be utilized. The thin film may include (*e.g.*, consist of) one of the aforementioned metals, or may include (*e.g.*, consist of) an alloy of different types (kinds) of metals. As the thin film is disposed on the anode current collector 21, the plated form of the second anode active material layer being plated between the thin film and the first anode active material layer 22 may be further flattened, and cycling performance of the all-solid secondary battery 1 may further improve.

The thin film may have a thickness of, for example, about 1 nm to about 800 nm, about 10 nm to about 700 nm, about 50 nm to about 600 nm, or about 100 nm to about 500 nm. If (*e.g.*, when) the thickness of the thin film is less than 1 nm, it may be difficult to achieve functions attributable to the thin film. If (*e.g.*, when) the thickness of the thin film is excessively large, it may cause the thin film to absorb lithium by itself, reducing the amount of lithium precipitated at the anode. As a result, the all-solid battery may have decreased energy density and the cycling performance of the all-solid secondary battery 1 may deteriorate. The thin film may be disposed on the anode current collectors 21 by a method such as a vacuum deposition method, a sputtering method, and/or a plating method. However, the present disclosure is not limited to the aforementioned methods, and any suitable method available in the art that is capable of forming a thin film may be utilized.

The volume expansion rate, that is, the ratio of volume of the all-solid secondary battery 1 before charging to the volume of the all-solid secondary battery 1 after charging, may be 15% or less, 10% or less, and 5% or less, for example.

Volume changes of the anode layer 20 during charging of the all-solid secondary battery 1 may be mitigated by reduction in the volume of the cathode layer 10, and as a second inert member 50 accommodates volume changes of the anode layer 20, volume changes of the all-solid secondary battery 1 before and after charging may be mitigated.

The all-solid secondary battery 1 may have a volumetric energy density of, for example, about 500 Wh/L to about 900 Wh/L, about 500 Wh/L to about 800 Wh/L or about 500 Wh/L to about 700 Wh/L. The all-solid secondary battery 1 may have a gravimetric energy density of, for example, about 350 Wh/g to about 600 Wh/g, about 350 Wh/g to about 580 Wh/g, about 350 Wh/g to about 570 Wh/g, or about 350 Wh/g to about 550 Wh/g. As the all-solid secondary battery 1 has an energy density in the above ranges, the all-solid secondary battery 1 may provide an improved energy density compared to a secondary battery in the related art.

## Solid Electrolyte Layer

### Solid Electrolyte Layer: Solid Electrolyte

Referring to FIGs. 2 and 3, a solid electrolyte layer 30 may include a solid electrolyte between the cathode layer 10 and the anode layer 20.

Examples of the solid electrolyte may include a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, at least one of (*e.g.*, at least one selected from) $Li_2S\text{-}P_2S_5$ and/or $Li_2S\text{-}P_2S_5\text{-}LiX$, wherein X is a halogen element; $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, and $Li_2S\text{-}P_2S_5\text{-}Z_mS_n$, wherein m and n each are a positive number, and Z is Ge, Zn or Ga; $Li_2S\text{-}GeS_2$, $Li_2S\text{-}SiS_2\text{-}Li_3PO_4$, and $Li_2S\text{-}SiS_2\text{-}Li_pMO_q$, wherein p and q each are a positive number and M is P, Si, Ge, B, Al, Ga or In; $Li_{7-x}PS_{6-x}Cl_x$, wherein $0{\leq}x{\leq}2$; $Li_{7-x}PS_{6-x}Br_x$, wherein $0{\leq}x{\leq}2$; and/or $Li_{7-x}PS_{6-x}I_x$, wherein $0{\leq}x{\leq}2$. The sulfide-based solid electrolyte may be prepared by treating starting materials, such as $Li_2S$ and $P_2S_5$, by a method such as melt-quenching, mechanical milling, and/or the like. In one or more embodiments, following such a treatment, heat treatment may be conducted. The sulfide-based solid electrolyte may be amorphous or crystalline, or may be in a mixed state thereof. For example, the solid electrolyte may be, among the sulfide-based solid electrolyte materials described herein, a material that contains at least sulfur (S), phosphorus (P), and lithium (Li), as its constitutive elements. For example, the solid electrolyte may be a material including $Li_2S\text{-}P_2S_5$. If (*e.g.*, when) a sulfide-based solid electrolyte material utilized to form the solid electrolyte contains $Li_2S\text{-}P_2S_5$, the mixing molar ratio of $Li_2S : P_2S_5$ may be in a range of, for example, about 20 : 80 to about 90 : 10, about 25 : 75 to about 90 : 10, about 30 : 70 to about 70: 30, or about 40: 60 to about 60: 40.

For example, the sulfide-based solid electrolyte may include an argyrodite-type or kind solid electrolyte represented by Formula 1:

Formula 1    $Li^+_{12-n-x}A^{n+}X^{2-}_{6-x}Y^-_x$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, and $1 \leq n \leq 5$ and $0 < x < 2$ may be satisfied. For example, the sulfide-based solid electrolyte may be an argyrodite-type or kind compound including one or more (e.g., one or more selected from) $Li_{7-x}PS_{6-x}Cl_x$, wherein $0 \leq x \leq 2$, $Li_{7-x}PS_{6-x}Br_x$, wherein $0 \leq x \leq 2$, and/or $Li_{7-x}PS_{6-x}I_x$, wherein $0 \leq x \leq 2$. For example, the sulfide-based solid electrolyte may be an argyrodite-type or kind compound including at least one of (e.g., at least one selected from) $Li_6PS_5Cl$, $Li_6PS_5Br$, and/or $Li_6PS_5I$.

An argyrodite-type or kind solid electrolyte may have a density of about 1.5 g/cc to about 2.0 g/cc. As the argyrodite-type or kind solid electrolyte has a density of 1.5 g/cc or more, internal resistance of the all-solid secondary battery may be reduced, and Li penetration to the solid electrolyte layer may be more effectively suppressed or reduced.

For example, the oxide-based all-solid electrolyte may be $Li_{1+x+y}Al_xTi_{2-x}Si_yP_{3-y}O_{12}$ ($0 < x < 2$ and $0 \leq y < 3$), $BaTiO_3$, $Pb(Zr,Ti)O_3$(PZT), $Pb_{1-x}La_xZr_{1-y}Ti_yO_3$(PLZT) ($0 \leq x < 1$, $0 \leq y < 1$), $Pb(Mg_3Nb_{2/3})O_3$-$PbTiO_3$(PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0 < x < 2$ and $0 < y < 3$), $Li_xAl_yTi_z(PO_4)_3$ ($0 < x < 2$, $0 < y < 1$, and $0 < z < 3$), $Li_{1+x+y}$(Al, Ga)$_x$(Ti, Ge)$_{2-x}Si_yP_{3-y}O_{12}$ ($0 \leq x \leq 1$ and $0 \leq y \leq 1$), $Li_xLa_yTiO_3$ ($0 < x < 2$ and $0 < y < 3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M = Te, Nb, or Zr, and $0 \leq x \leq 10$), or a combination thereof. The oxide-based solid electrolyte may be produced, for example, by a sintering method and/or the like.

For example, the oxide-based solid electrolyte may be a garnet-type or kind solid electrolyte of (e.g., selected from) $Li_7La_3Zr_2O_{12}$ (LLZO) and/or $Li_{3+x}La_3Zr_{2-a}M_aO_{12}$ (M doped LLZO, where M=Ga, W, Nb, Ta, or Al, $0 < a < 2$, and $0 \leq x \leq 10$).

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include a liquid. The polymer solid electrolyte includes a polymer, and examples of the polymer include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the embodiment is not limited thereto, and any polymer electrolytes commonly available in the art may also be used. Any lithium salts commonly available in the art may also be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x}+1SO_2)(C_yF_{2y}+1SO_2)$ (where x and y are each independently from 1 to 20), LiCl, LiI, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

The gel electrolyte is, for example, a polymer gel electrolyte. For example, the gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte used in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in the polymer solid electrolyte. The organic solvent may be selected from organic solvents used in liquid electrolytes. The lithium salt may be selected from lithium salts used in polymer solid electrolyte. The ionic liquid refers to a salt in a liquid state, and a molten salt at room temperature composed solely of ions and having a melting point below room temperature. The ionic liquid may include, for example, at least one compound including a) at least one cation selected from ammonium, pyrimidium, pyridinium, pyrimidium, imidazolium, piperidinium, pyrazolium, oxazolium, pyridazinium, phosphonium, sulfonium, triazole, and any mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

The polymer solid electrolyte may include, for example, a dry polymer electrolyte, a gel polymer electrolyte, or a combination thereof.

The dry polymer electrolyte may be, for example, an electrolyte which is a mixture of a lithium salt and a polymer. For example, the dry polymer electrolyte may be a polymer electrolyte not containing liquid electrolyte. The polymer included in the dry polymer electrolyte may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), polystyrene-butadiene), poly(styrene-isoprene-styrene), a poly(styrene-b-divinylbenzene) block copolymer, a poly(styrene-ethylene oxide-styrene) block copolymer, or a combination thereof.

The gel polymer electrolyte may be an electrolyte including a liquid electrolyte and a polymer. The liquid electrolyte may be, for example, a mixture of a lithium salt and an organic solvent. The polymer utilized in the gel polymer electrolyte may be selected from polymers included in a dry polymer electrolyte.

The solid electrolyte layer 30 may be impermeable to lithium polysulfides. Therefore, side reactions between an anode layer and lithium polysulfides generated upon charging and discharging of a sulfide-based cathode active material may be inhibited or reduced. As a result, cycling performance of the all-solid secondary battery 1 including the solid electrolyte layer 30 may improve.

**Solid Electrolyte Layer: Binder**

The solid electrolyte layer 30 may further include, for example, a binder. Examples of the binder included in the solid electrolyte layer 30 may include styrene butadiene rubber (SBR), polytetrafluoroethylene, polyvinylidene fluoride, polyethylene, and/or the like. However, the binder is not limited to the aforementioned examples and may be any suitable binder available in the art. The binder in the solid electrolyte layer 30 may be identical to or different from a binder included in the cathode active material layer 12 and/or the first anode active material layer 22. In one or more embodiments, the binder may not be provided.

The content (*e.g.*, amount) of the binder included in the solid electrolyte layer 30 may be, about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, relative to the total weight of the solid electrolyte layer 30.

According to one or more embodiments of the disclosure, a method of preparing a composite cathode active material includes: a first process including: providing a lithium-containing sulfide-based compound; providing a composite; and providing a second carbon-based material, and a second process including: i) mechanically milling the lithium-containing sulfide-based compound, the composite, and the second carbon-based material; or a second process including: ii) mechanically milling the lithium-containing sulfide-based compound and the composite; and mixing the milling product with the second carbon-based material.

If (*e.g.*, when) the second carbon-based material is CNF (carbon nanofiber(s)), the second process may be performed by: mechanically milling the lithium-containing sulfide-based compound and the composite; and mixing the milling product with the second carbon-based material.

If (*e.g.*, when) the second carbon-based material is CNT (carbon nanotube(s)), the second process may be performed by: mechanically milling the lithium-containing sulfide-based compound, the composite, and the second carbon-based material. As such, if (*e.g.*, when) utilizing CNF, the milling process may not be provided, unlike if (*e.g.*, when) utilizing CNT. Thus, a lithium battery may have improved capacity and an improved capacity retention ratio relative to when utilizing CNT.

The mechanical milling may be performed by utilizing a planetary ball mill at about 300 rpm to about 1,000 rpm, about 400 rpm to about 800 rpm, or about 450 rpm to about 600 rpm. The milling may be performed for a duration of, for example, about 1 hour to about 20 hours, or about 5 hours to about 15 hours. The mixing may be performed utilizing a mixer, a mortar and pestle, and/or the like.

The composite may include at least one first metal oxide represented by $M_aO_b$ ($0<a\leq3$ and $0<b<4$, wherein when a is 1, 2, or 3, b is not an integer), a first carbon-based material, and a second carbon-based material, wherein the first metal oxide may be disposed within a matrix of the first carbon-based material, M may be at least one metal of (*e.g.*, at least one metal selected from) Groups 2 to 13, Group 15, and/or Group 16 of the Periodic Table of Elements, and the second carbon-based material may include a fibrous carbon having an aspect ratio of 10 or more.

The milling method utilized in the mechanical milling is not limited to any particular method, and may be any suitable method available in the art as a method of mechanically bringing a lithium-containing sulfide-based compound, a composite, and a second carbon-based material into contact with one another.

The lithium-containing sulfur-based compound may be provided.

Subsequently, the composite may be provided.

The providing of the composite may include, for example, supplying a reaction gas composed of a carbon source gas to a structure including a metal oxide and conducting heat treatment to provide an undoped composite.

The providing of a composite may include, for example, providing an undoped composite by supplying a reaction gas composed of a carbon source gas to at least one second metal oxide represented by $M_aO_c$ ($0<a\leq3$ and $0<c\leq4$, wherein when a is 1, 2, or 3, b is an integer) and conducting heat treatment, wherein M may be at least one metal of (*e.g.*, at least one metal selected from) Groups 2 to 13, Group 15, and/or Group 16 of the Periodic Table of Elements.

The carbon source gas may be a gas including (*e.g.*, consisting of) a compound represented by Formula 7 or may be a mixed gas containing at least one of (*e.g.*, at least one selected from among) a compound represented by Formula 7, a compound represented by Formula 8, and/or an oxygen-containing gas represented by Formula 9.

$$\text{Formula 7} \qquad C_nH_{(2n+2-a)}[OH]_a$$

In Formula 7, n may be 1 to 20, and a may be 0 or 1;

$$\text{Formula 8} \qquad C_nH_{2n}$$

In Formula 8, n may be 2 to 6;

$$\text{Formula 9} \qquad C_xH_yO_z$$

In Formula 9, x may be 0 or an integer of 1 to 20, y may be 0 or an integer of 1 to 20, and z may be 1 or 2.

The compound represented by Formula 7 and the compound represented by Formula 8 may be one or more of (*e.g.*, one or more selected from) among methane, ethylene, propylene, methanol, ethanol, and/or propanol. An oxygen-containing gas represented by Formula 9 may include, for example, carbon dioxide ($CO_2$), carbon monoxide (CO), water vapor ($H_2O$), or a mixture thereof.

After the supplying of a reaction gas including (*e.g.*, consisting of) a carbon source gas to a second metal oxide represented by $M_aO_c$ ($0<a\leq3$ and $0<c\leq4$, and when a is 1, 2, or 3, c is an integer) and performing a heat treatment, there may be a cooling process further performed utilizing at least one inert gas of (*e.g.*, at least one inert gas selected from) nitrogen, helium, and/or argon. The cooling process may refer to a process of adjusting to room temperature (20-25°C). The carbon source gas may include at least one inert gas of (*e.g.*, at least one inert gas selected from) nitrogen, helium, and/or argon.

In the method of preparing a composite, the process of growing a carbon-based material, for example, graphene, may be carried out under one or more suitable conditions depending on a gas-phase reaction.

According to a first condition, for example, methane may be first supplied to a reactor loaded with a second metal oxide represented by $M_aO_c$ ($0<a\leq3$ and $0<c\leq4$, and when a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. At the heat treatment temperature (T), the heat treatment may be carried out for the duration of a reaction time. The reaction time may be, for example, about 4 hours to about 8 hours. The heat-treated product may be cooled to room temperature to produce a composite. The process of cooling from the heat treatment temperature (T) to room temperature may take, for example, about 1 hour to about 5 hours.

According to a second condition, for example, hydrogen may be first supplied to a reactor loaded with a second metal oxide represented by $M_aO_c$ ($0<a\leq3$ and $0<c\leq4$, wherein when a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a reaction time at the heat treatment temperature (T), methane gas may be supplied, and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The process of cooling from the heat treatment temperature (T) to room temperature may take, for example, about 1 hour to about 5 hours.

According to a third condition, for example, hydrogen may be first supplied to a reactor loaded with a second metal oxide represented by $M_aO_c$ ($0<a\leq3$ and $0<c\leq4$, wherein when a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a reaction time at the heat treatment temperature (T), a mixed gas of methane and hydrogen may be supplied, and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The process of cooling from the heat treatment temperature (T) to room temperature may take, for example, about 1 hour to about 5 hours.

If (*e.g.*, when) the carbon source gas includes water vapor in the process of producing the composite, the composite with excellent or suitable conductivity may be obtained. The amount of water vapor in the gas mixture is not limited and may be, for example, about 0.01 vol% to about 10 vol% with respect to 100 vol% (*i.e.*, the total volume) of the carbon source gas. For example, the carbon source gas may be methane; a mixed gas containing methane and an inert gas; or a mixed gas containing methane and an oxygen-containing gas.

For example, the carbon source gas may be methane; a mixed gas of methane and carbon dioxide; or a mixed gas of methane, carbon dioxide and water vapor. In the mixed gas of methane and carbon dioxide, the molar ratio of methane and carbon dioxide may be about 1:0.20 to about 1:0.50, about 1:0.25 to about 1:0.45, or about 1:0.30 to about 1:0.40. In the mixed gas of methane, carbon dioxide and water vapor, the molar ratio of methane, carbon dioxide and water vapor may be about 1 : about 0.20 to about 0.50 : about 0.01 to about 1.45, about 1 : about 0.25 to about 0.45 : about 0.10 to about 1.35, or about 1 : about 0.30 to about 0.40 : about 0.50 to about 1.0.

The carbon source gas may be, for example, carbon monoxide or carbon dioxide. The carbon source gas may be, for example, a mixed gas of methane and nitrogen. In the mixed gas of methane and nitrogen, the molar ratio of methane and nitrogen may be about 1:0.20 to about 1:0.50, about 1:0.25 to about 1:0.45, or about 1:0.30 to about 1:0.40. The carbon source gas may not include (*e.g.*, may exclude) an (*e.g.*, any) inert gas such as nitrogen.

A heat treatment pressure may be selected in consideration of a heat treatment temperature, the composition of a gas mixture, a desired or suitable amount of carbon coating, and/or the like. The heat treatment pressure may be controlled or selected by adjusting the incoming amount of a gas mixture and the outgoing amount of a gas mixture. The heat treatment pressure may be, for example, 0.5 atm or more, 1 atm or more, 2 atm or more, 3 atm or more, 4 atm or more, or 5 atm or more.

A heat treatment time is not particularly limited and may be appropriately adjusted according to a heat treatment temperature, a heat treatment pressure, the composition of a gas mixture, and a desired or suitable amount of carbon coating. For example, the reaction time at the heat treatment temperature may be, for example, about 10 minutes to about 100 hours, about 30 minutes to about 90 hours, or about 50 minutes to about 40 hours. For example, as the heat treatment time increases, the amount of carbon deposited, for example, a graphene amount, may increase and thus, the electrical properties of the composite may improve. It should be noted that this trend may not necessarily be directly proportional to time. For example, after a certain period of time, carbon deposition, for example, graphene deposition may no longer take place or the deposition rate may decrease.

Through a gas-phase reaction of the carbon source gas described above, even at relatively low temperatures, the undoped composite may be obtained by providing substantially uniform coating of a carbon-based material, *e.g.*, graphene coating, to one or more of (*e.g.*, one or more selected from among) a second metal oxide represented by $M_aO_c$ (0<a≤3 and 0<c≤4, wherein when a is 1, 2, or 3, c is an integer) and/or a reduction product thereof, and/or a first metal oxide represented by $M_aO_b$ (0<a≤3 and 0<b<4, wherein when a is 1, 2, or 3, b is not an integer).

The composite may include, for example, a matrix of a carbon-based material, for example, a graphene matrix, which has at least one of (*e.g.*, at least one structure selected from) a spherical structure, a spiral structure having a plurality of spherical structures connected to one another, a cluster structure having a plurality of spherical structures agglomerated, and/or a sponge structure; and at least one of (*e.g.*, at least one selected from) a first metal oxide represented by $M_aO_b$ (0<a≤3 and 0<b<4, wherein a is 1, 2, or 3, and b is not an integer) and/or a second metal oxide represented by $M_aO_c$ (0<a≤3 and 0<c≤4, wherein when a is 1, 2, or 3, c is an integer), disposed within the matrix of the carbon-based material.

Subsequently, a mixture of the lithium-containing sulfide-based cathode active material and the composite, or the mixture and a second-carbon based material may be mechanically milled.

For the milling, a Nobilta mixer, a planetary mixer, and/or the like may be utilized. The rotation rate of a mixer during the milling, although it depends on the type or kind of milling equipment, may be about 500 rpm to about 2,000 rpm, for example. If (*e.g.*, when) the milling speed is in the above range, an appropriate or suitable shear force may be applied to the lithium-containing sulfide-based cathode active material and the composite, allowing successful formation of chemical bonds between the lithium-containing sulfide-based cathode active material and the composite, and subsequently allowing the complexation to successfully proceed, to allow the composite to be substantially uniformly coated on the lithium-containing sulfide-based cathode active material, thus forming a substantially uniform and substantially continuous shell. The milling time may be about, for example, about 1 hour to about 20 hours, or about 10 hour to about 20 hours. If (*e.g.*, when) the milling time is in the above range, the composite may be substantially uniformly coated on the lithium-containing sulfide-based cathode active material, thus forming a substantially uniform and substantially continuous shell, and production efficiency may be high or may increase.

The composite utilized for the mechanical milling may have an average particle diameter (D50) of, for example, about 1 μm to about 20 μm, about 3 μm to about 15 μm, or about 5 μm to about 10 μm.

According to one or more embodiments, the process of mixing the milling product with a second carbon-based material may be performed.

As used herein, a and b in "$C_a$-$C_b$" represent the number of carbon atoms in a functional group. Here, the functional group may include a to b number of carbon atoms. For example, "$C_1$-$C_4$ alkyl group" refers to an alkyl group having 1 to 4 carbon atoms, such as $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

A particular radical may be called a mono-radical or a di-radical depending on the context. For example, when a substituent group needs two binding sites for binding with the rest of the molecule, the substituent may be understood as a di-radical. For example, a substituent group specified as an alkyl group that needs two binding sites may be a di-radical, such as $-CH_2$-, $-CH_2CH_2$-, and $-CH_2CH(CH_3)CH_2$-. The term "alkylene" as used herein clearly indicates that the radical is a di-radical.

The terms "alkyl group" and "alkylene group" as used herein refer to a branched or unbranched aliphatic hydrocarbon group. In one or more embodiments, the alkyl group may be substituted or unsubstituted. Examples of the alkyl group include, without being limited to, a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, and a cycloheptyl group, each of which may be optionally substituted or unsubstituted. In one or more embodiments, the alkyl group may have 1 to 5 carbon atoms. For example, a $C_1$-$C_5$ alkyl group may be methyl, ethyl, propyl, isopropyl, butyl, iso-butyl, sec-butyl, pentyl, 3-pentyl, and/or the like; however, the present disclosure is not necessarily limited thereto.

As used herein, the term "cyanoalkyl group" refers to an alkyl group to which a cyano group is connected. For example, the cyanoalkyl group may be cyanomethyl, cyanobutyl, or cyanopentyl.

The term "alkenyl group" as used herein refers to a hydrocarbon group having 2 to 20 carbon atoms with at least one carbon-carbon double bond. Examples of the alkenyl group include an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, and a cycloheptenyl group. In one or more embodiments, the alkenyl group may be substituted or unsubstituted. In one or more embodiments, the alkenyl group may have 2 to 40 carbon atoms.

The term "aromatic" as used herein refers to a ring or ring system with a conjugated n electron system, and may refer to a carbocyclic aromatic group (*e.g.*, a phenyl group) and/or a heterocyclic aromatic group (*e.g.*, pyridine). In this regard, an aromatic ring system as a whole may include a monocyclic ring or a fused polycyclic ring (i., a ring that shares adjacent atom pairs).

The term "aryl group" as used herein refers to an aromatic ring or ring system (*i.e.,* a ring fused from at least two rings that shares two adjacent carbon atoms) having only carbon atoms in its backbone. If (*e.g.*, when) the aryl group is a ring system, each ring in the ring system is aromatic. Examples of the aryl group include a phenyl group, a biphenyl group, a naphthyl group, a phenanthrenyl group, and naphthacenyl group, but the present disclosure is not limited thereto. These aryl groups may be substituted or unsubstituted.

The term "heteroaryl group" as used herein refers to an aromatic ring system with one ring or plural fused rings, in which at least one ring atom is not carbon, but is, *e.g.*, a heteroatom. In the fused ring system, the at least one heteroatom may be present only in one ring. For example, the heteroatom may be oxygen, sulfur, or nitrogen, but the present disclosure is not limited thereto. Examples of the heteroaryl group include, but are not limited to a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, and an indolyl group.

The term "halogen" as used herein refers to a stable element belonging to Group 17 of the Periodic Table of Elements, for example, fluorine, chlorine, bromine, or iodine. For example, the halogen may be fluorine and/or chlorine.

The present disclosure will be described in greater detail through the following examples and comparative examples. However, it will be understood that the examples are provided only to illustrate the present disclosure and are not to be construed as limiting the scope of the present disclosure.

**Preparation of Composite**

**Preparation Example 1: $Al_2O_3$-Gr Composite**

$Al_2O_3$ particles (average particle diameter: about 20 nm) were loaded into a reactor, with $CH_4$ being supplied into the reactor at 300 sccm and 1 atm for about 30 minutes, and the temperature inside the reactor was elevated to 1,000 °C.

Subsequently, a heat treatment was performed while maintaining the above temperature for 7 hours. Then, the temperature inside the reactor was adjusted to room temperature (20-25 °C) to obtain a composite having $Al_2O_3$ particles and its reduction product $Al_2O_z$ (0<z<3) particles, embedded in graphene (Gr).

The content (*e.g.*, amount) of aluminum oxide ($Al_2O_3$ particles and its reduction product $Al_2O_z$ (0<z<3) particles) included in the composite was 75 wt%.

**Preparation Example 2: Al$_2$O$_3$-Gr Composite**

A composite was prepared following substantially the same process as Preparation Example 1, except that Al$_2$O$_3$ particles (average particle diameter: about 200 nm) were utilized instead of the Al$_2$O$_3$ particles (average particle diameter: about 20 nm).

**Comparative Preparation Example 1: SiO$_2$-Gr Composite**

SiO$_2$ particles (average particle diameter: about 15 nm) were loaded into a reactor, with CH$_4$ being supplied into the reactor at 300 sccm and 1 atm for about 30 minutes, and the temperature inside the reactor was elevated to 1,000 °C.

Subsequently, a heat treatment was performed while maintaining the above temperature for 7 hours. Then, the temperature inside the reactor was adjusted to room temperature (20-25 °C) to produce a composite in which SiO$_2$ particles and its reduction product SiO$_y$ (0<y<2) particles are embedded in graphene.

**Preparation of Composite Cathode Active Material**

**Example 1: Al$_2$O$_3$-Gr coated and CNF-mixed Li$_2$S-Gr + CNF Composite Cathode Active Material, coated with 33.3 wt% of Gr (25 wt% of aluminum oxide), mixed with 16.7 wt% of CNF (Li$_2$S-Gr+CNF)**

Li$_2$S having an average particle diameter of 10 $\mu$m and the composite (Al$_2$O$_3$-Gr) prepared in Preparation Example 1 were milled at a rotation rate of about 500 rpm for about 10 hours utilizing a planetary mixer to obtain a composite cathode active material precursor. Here, Li$_2$S and the composite prepared in Preparation Example 1 were mixed in a weight ratio of 3:2.

Carbon nanofibers (hereinafter, referred to as CNF) were added to the composite cathode active material precursor and mixed utilizing a mortar and pestle, to obtain a composite cathode active material (Li$_2$S-Gr+CNF). The mixing weight ratio of the composite cathode active material precursor and the CNF was 5:1, and the CNF had a length (average length )of 16 $\mu$m and a diameter (average diameter) of 300 nm, and had an aspect ratio of 53

The weight ratio of Li$_2$S, the composite prepared in Preparation Example 1, and CNF was 30:20:10.

In the composite cathode active material, with respect to 100 wt% of the composite cathode active material, the content (*e.g.*, amount) of lithium sulfide was 50 wt%, the content (*e.g.*, amount) of the composite (Al$_2$O$_3$-Gr) prepared in Preparation Example 1 was 33.3 wt%, and the content (*e.g.*, amount) of CNF was 16.7 wt%.

**Example 2: Al$_2$O$_3$-Gr- and CNT-coated Li$_2$S-Gr-CNT Composite Cathode Active Material, coated with 33.3 wt% of Gr, coated with 16.7 wt% CNT (Li$_2$S-Gr-CNT)**

Li$_2$S having an average particle diameter of 10 $\mu$m, CNT, and the composite (Al$_2$O$_3$-Gr) prepared in Preparation Example 1 were milled for about 10 hours at a rotation rate of about 500 rpm to obtain a composite cathode active material (Li$_2$S-Gr-CNT). Li$_2$S, the composite prepared in Preparation Example 1, and CNT were mixed in a weight ratio of 30:20:10.

In the composite cathode active material, with respect to 100 wt% of the composite cathode active material, the content (*e.g.*, amount) of lithium sulfide was 50 wt%, the content (*e.g.*, amount) of the composite (Al$_2$O$_3$-Gr) prepared in Preparation Example 1 was 33.3 wt%, and the content (*e.g.*, amount) of CNT was 16.7 wt%.

By scanning electron microscopy analysis of the composite cathode active material, the presence of carbon nanotubes (CNT) on the surface of the composite cathode active material was confirmed. The carbon nanotubes had a diameter (average diameter) of 6nm and a length (average length) of 100 $\mu$m, and and had an aspect ratio of 16.7

**Example 3: Al$_2$O$_3$-Gr coated and CNF-mixed (Li$_2$S-Gr) + CNF Composite Cathode Active Material, coated with 20 wt% of Gr, mixed with 9.1 wt% of CNF (Li$_2$S-GB+CNF)**

A composite cathode active material was prepared following substantially the same process as in Example 1, except that the content (*e.g.*, amount) of CNF was changed to 9.1 wt% with respect to 100 wt% of the final composite cathode active material. The mixing weight ratio of the composite cathode active material precursor (Li$_2$S-Gr) and the CNF was 10:1, and the CNF had a length (average length) of 16 $\mu$m and a diameter (average diameter) of 300 nm, and had an aspect ratio of 53. Further, the weight ratio of Li$_2$S, the composite (Al$_2$O$_3$-Gr) prepared in Preparation Example 1, and CNF was 30:20:5. In the composite cathode active material, with respect to 100 wt% of the composite cathode active material, the content (*e.g.*, amount) of lithium sulfide was 54.5 wt%, the content (*e.g.*, amount) of the composite (Al$_2$O$_3$-Gr) prepared in Preparation Example 1 was 36.4 wt%, and the content (*e.g.*, amount) of CNF was 9.1 wt%.

**Example 4: Al$_2$O$_3$-Gr coated and CNT-coated Li$_2$S-Gr-CNT Composite Cathode Active Material, coated with 36.4 wt% of Gr, coated with 9.1 wt% CNT 9.1 (Li$_2$S-Gr-CNT)**

A composite cathode active material was prepared following substantially the same process as in Example 2, except that the content (*e.g.*, amount) of CNT was changed to 9.1 wt% with respect to 100 wt% of the final composite cathode active material. Li$_2$S, the composite prepared in Preparation Example 1, and CNT were mixed in a weight ratio of 30:20:5. In the composite cathode active material, with respect to 100 wt% of the composite cathode active material, the content (*e.g.*, amount) of lithium sulfide was 54.5 wt%, the content (*e.g.*, amount) of the composite (Al$_2$O$_3$-Gr) prepared in Preparation Example 1 was 36.4 wt%, and the content (*e.g.*, amount) of CNT was 9.1 wt%.

**Example 5: Al$_2$O$_3$-Gr coated and CNF-mixed Li$_2$S + CNF Composite Cathode Active Material, coated with 27.3 wt% of Gr (20.5 wt% of aluminum oxide), mixed with 18.2 wt% of CNF (Li$_2$S-Gr+CNF)**

A composite cathode active material was prepared following the same process as in Example 1, except that the content (*e.g.*, amount) of Al$_2$O$_3$-Gr was changed to 27.3 wt% with respect to 100 wt% of the composite cathode active material.
In the composite cathode active material, with respect to 100 wt% of the composite cathode active material, the content (*e.g.*, amount) of lithium sulfide was 54.5 wt%, the content (*e.g.*, amount) of the composite (Al$_2$O$_3$-Gr) prepared in Preparation Example 1 was 27.3 wt%, and the content (*e.g.*, amount) of CNF was 18.2 wt%.

**Example 6: Al$_2$O$_3$-Gr coated and CNT-coated Li$_2$S-CNT Composite Cathode Active Material, coated with 27.3 wt% of Gr, coated with 18.2 wt% CNT (Li$_2$S-Gr-CNT)**

A composite cathode active material was prepared following substantially the same process as in Example 2, except that the content (*e.g.*, amount) of Al$_2$O$_3$-Gr was changed to 27.3 wt% with respect to 100 wt% of the composite cathode active material.
In the composite cathode active material, with respect to 100 wt% of the composite cathode active material, the content (*e.g.*, amount) of lithium sulfide was 54.5 wt%, the content (*e.g.*, amount) of the composite (Al$_2$O$_3$-Gr) prepared in Preparation Example 1 was 27.3 wt%, and the content (*e.g.*, amount) of CNT was 18.2 wt%.

**Comparative Example 1: Bare Li$_2$S Composite Cathode Active Material**

As a cathode active material, Li$_2$S having an average particle diameter of 10 μm was utilized.

**Comparative Example 2: Li$_2$S+CNF**

Utilizing a planetary mixer, Li$_2$S having an average particle diameter of 10 μm was milled at a rotation rate of about 1,000 rpm to 2,000 rpm for about 5 minutes to 30 minutes, and CNF were added thereto and mixed together utilizing a mortar and pestle to produce a composite cathode active material (Li$_2$S+CNF). The Li$_2$S and CNF were mixed in a weight ratio of 30:10, and the CNF had a length (average length) of 16 μm and a diameter (average diameter) of 300 nm, and had an aspect ratio of 53

**Comparative Example 3: CNT-coated Li$_2$S Composite Cathode Active Material (Li$_2$S-CNT)**

Li$_2$S with an average particle diameter of 10 μm and CNT were milled utilizing a ball mill at a rotation rate of about 1,000 rpm to about 2,000 rpm for about 5 minutes to 30 minutes to obtain a composite cathode active material (Li$_2$S-CNT). Li$_2$S and CNT were mixed in a weight ratio of 30:10. Here, the CNT utilized was substantially the same CNT as in Example 2.

**Comparative Example 4: CNT- and CNF-mixed Li$_2$S Composite Cathode Active Material, mixed with 0.1 wt% of CNF (Li$_2$S-CNT+CNF)**

Li$_2$S with an average particle diameter of 10 μm and CNT were milled utilizing a ball mill at a rotation rate of about 1,000 rpm to about 2,000 rpm for about 5 minutes to 30 minutes to obtain a composite cathode active material precursor. Li$_2$S and CNT were mixed in a weight ratio of 30:10.
CNF were added to the composite cathode active material and mixed together utilizing a mortar and pestle to obtain a composite cathode active material (Li$_2$S-CNT+CNF). The mixing ratio of Li$_2$S, CNT, and CNF was 30:10:10. Here, the CNF and CNT utilized were substantially the same as the ones utilized in Examples 1 and 2, respectively.

**Comparative Example 5: Li$_2$S-Gr**

Li$_2$S having an average particle diameter of 10 $\mu$m and the composite (Al$_2$O$_3$-Gr) prepared in Preparation Example 1 were milled at a rotation rate of about 1,000 rpm to 2,000 rpm for about 5 minutes to 30 minutes utilizing a planetary mixer to produce a composite cathode active material. Li$_2$S and the composite prepared in Preparation Example 1 were mixed in a weight ratio of 30:20.

The compositions of the starting materials utilized in the preparation of the composite cathode active materials prepared in Examples 1 to 6 and Comparative Examples 1 to 5 are shown in Table 1.

Table 1

| Item | Cathode Active Material Composition | Content (parts by weight) | | | |
|---|---|---|---|---|---|
| | | Li2S | Gr | CNT | CNF |
| Example 1 | (Li$_2$S-Gr+CNF) | 30 | 20 | | 10 |
| Example 2 | (Li$_2$S-Gr-CNT) | 30 | 20 | 10 | |
| Example 3 | (Li$_2$S-Gr+CNF) | 30 | 20 | | 5 |
| Example 4 | (Li$_2$S-Gr-CNT) | 30 | 20 | 5 | |
| Example 5 | (Li$_2$S-Gr+CNF) | 30 | 15 | | 10 |
| Example 6 | (Li$_2$S-Gr-CNT) | 30 | 15 | 10 | |
| Comparative Example 1 | Li$_2$S | 30 | | | |
| Comparative Example 2 | Li$_2$S+CNF | 30 | | | 10 |
| Comparative Example 3 | Li$_2$S-CNT | 30 | | 10 | |
| Comparative Example 4 | Li$_2$S-CNT+CNF | 30 | | 10 | 10 |
| Comparative Example 5 | Li$_2$S-Gr | 30 | 20 | | |

In Table 1, the total weight of the composite cathode active material represents the sum of weights of lithium sulfide, Gr, CNT, and CNF, and SE represents the content (*e.g.*, amount) of solid electrolyte utilized in the preparation of the cathode.

**Manufacturing Example 1: All-Solid Secondary Battery**

**Preparation of Anode Layer**

As an anode current collector, a 10 $\mu$m-thick stainless steel (SUS) sheet was prepared. Further, as anode active materials, carbon black (CB) having a primary particle diameter of about 30 nm and silver (Ag) particles having an average particle diameter of about 60 nm were prepared.

In a vessel containing 4 grams of mixed powder containing CB and Ag particles in a weight ratio of 3:1, 4 grams of an N-methylpyrrolidone (NMP) solution containing 7 wt% of a polyvinylidene fluoride (PVDF) binder (#9300, KUREHA) were added to prepare a mixed solution. Then, the mixed solution was stirred while slowly adding NMP to this mixed solution, to prepare a slurry. The prepared slurry was applied to the SUS sheet by a bar coater, and then dried in open air at 80 °C for 10 minutes. The laminate thus obtained was vacuum-dried at 40 °C for 10 hours. The dried laminate was cold roll-pressed with a pressure of 5 ton·f/cm$^2$ and at a rate of 5 m/sec to flatten the surface of a first anode active material layer of the laminate. Through the above process, an anode layer was prepared. The thickness of the first anode active material layer included in the anode layer was about 15 $\mu$m. The first anode active material layer and the anode current collector had substantially the same surface area.

**Preparation of Cathode Layer**

As a cathode active material, the composite cathode active material prepared in Example 1 was utilized. As a solid electrolyte, argyrodite-type or kind Li$_6$PS$_5$Cl crystals (D50=3.0 $\mu$m, crystalline) were prepared. As a conductive material, Ketjenblack was prepared. The above components were mixed in a weight ratio of composite cathode active material: solid electrolyte : conductive material = 45 : 45 : 1 to produce a cathode mixture. The cathode mixture was obtained by dry mixing, utilizing a ball mill. The cathode mixture obtained by ball-milling formed ionically conductive and electronically conductive networks.

The cathode mixture was placed on one side of a cathode current collector made of SUS or an aluminum foil carbon-coated on one side thereof, and was plate-pressed for 10 minutes with a pressure of 200 MPa to produce a cathode layer. The thickness of the cathode layer was about 120 $\mu$m. The thickness of the cathode active material layer was about 100 $\mu$m, and the thickness of the carbon-coated aluminum foil was about 20 $\mu$m. The cathode active material layer and the cathode current collector had substantially the same surface area.

**Preparation of Solid Electrolyte Layer**

In an argyrodite-type or kind crystal $Li_6PS_5Cl$ solid electrolyte ($D_{50}$=3.0 $\mu$m, crystalline), 1.5 parts by weight of an acryl-based binder with respect to 98.5 parts by weight of the solid electrolyte was added to prepare a mixture. The prepared mixture was stirred while adding octyl acetate thereto, to prepare a slurry. The prepared slurry was applied onto a 15-$\mu$m thick nonwoven fabric placed on a 75 $\mu$m-thick polyethylene terephthalate (PET) substrate by utilizing a bar coater, and dried in open air at a temperature of 80 °C for 10 minutes to obtain a laminate. The obtained laminate was vacuum-dried at a temperature of 80 °C for 2 hours. Through the above process, a solid electrolyte layer was prepared.

**Preparation of All-Solid Secondary Battery**

A stack was prepared by placing the solid electrolyte layer on the anode layer such that the first anode active material layer came in contact with the solid electrolyte layer, and then placing the cathode layer on the solid electrolyte layer.

The prepared stack was plate-pressed with a pressure of 500 Mpa at 85 °C for 30 minutes. Such a press treatment may sinter the solid electrolyte layer and improve battery performance. The thickness of the sintered solid electrolyte layer was about 45 $\mu$m. The density of the argyrodite-type or kind crystal $Li_6PS_5Cl$ solid electrolyte included in the sintered solid electrolyte layer was 1.6 g/cc. The solid electrolyte layer and the anode layer had substantially the same surface area.

The pressed stack was placed in a pouch and vacuum-sealed to prepare an all-solid secondary battery. A part of the cathode current collector and the anode current collector was extended out of the sealed battery and utilized as a cathode layer terminal and an anode layer terminal, respectively.

**Manufacturing Example 2**

An all-solid secondary battery was prepared in substantially the same manner as in Manufacturing Example 1, except that as the cathode active material for the cathode layer preparation, the composite cathode active material prepared in Example 2 was utilized instead of the composite cathode active material prepared in Example 1.

**Manufacturing Examples 3 to 6**

All-solid secondary batteries were prepared in substantially the same manner as in Manufacturing Example 1, except that as the cathode active material for the cathode layer preparation, the composite cathode active materials prepared in Examples 3 to 6 were respectively utilized instead of the composite cathode active material prepared in Example 1.

**Comparative Manufacturing Examples 1 to 5**

All-solid secondary batteries were prepared in substantially the same manner as in Manufacturing Example 1, except that as the cathode active material for the cathode layer preparation, the composite cathode active materials prepared in Comparative Examples 1 to 5 were respectively utilized instead of the composite cathode active material prepared in Example 1.

**Evaluation Example 1: SEM, HR-TEM and SEM-EDS Analyses**

The composite cathode active material prepared in Example 1 was analyzed utilizing scanning electron microscopy, high-resolution transmission electron microscopy, and energy-dispersive X-ray spectroscopy (SEM-EDS). For SEM-EDS analysis, a FEI Titan 80-300 of Philips Corporation was utilized.

The composite prepared in Preparation Example 1 shows a structure in which $Al_2O_3$ particles and its reduction

product $Al_2O_z$ (0<z<3) particles, are embedded in graphene. It was found that a graphene layer was disposed on the outside of one or more particles of (*e.g.*, one or more particles selected from) $Al_2O_3$ particles and/or $Al_2O_z$ (0<z<3). The one or more particles of (*e.g.*, one or more particles selected from) $Al_2O_3$ particles and/or $Al_2O_z$ (0<z<3) were substantially uniformly distributed within the graphene matrix. At least one of the $Al_2O_3$ particles and/or the $Al_2O_z$ (0<z<3) particles was found to have a particle diameter of about 20 nm. The particle diameters of the particles of the composite prepared in Preparation Example 1 were about 50 nm to 200 nm.

It was confirmed that the composite anode active material prepared in Example 1 has a shell formed by the composite containing graphene disposed on the lithium sulfide core or on the $Li_2S_n$ (n≥1)-containing composite core.

The composite cathode active material prepared in Example 1 was analyzed by SEM-EDS mapping.

The analysis shows the presence of aluminum (Al) distributed on the surface of the composite cathode active material of Example 1. This result confirms that the composite prepared in Preparation Example 1 is substantially uniformly coated on the lithium sulfide core or on the $Li_2S_n$ (n≥1)-containing composite core and forms a shell in the composite cathode active material.

**Evaluation Example 2: Lifetime Test**

The all-solid secondary batteries prepared in Manufacturing Examples 1 to 3, 5, and 6 and Comparative Manufacturing Examples 1 and 3 were evaluated for cycling performance by a cycling test as follows. The cycling test was performed with an all-solid secondary battery placed in a constant-temperature bath at 45 °C.

In the first cycle, each battery was charged at a constant current of 0.6 mA/cm$^2$ for 12.5 hours until the battery voltage reached a voltage of 2.5 V to 2.8 V. Then, the battery was discharged at a constant current of 0.6 mA/cm$^2$ for 12.5 hours until the battery voltage reached 0.3 V.

The all-solid secondary battery prepared in Comparative Manufacturing Example 2 was evaluated for cycling performance by a cycling test as follows. The cycling test was performed while the all-solid-state secondary battery was placed in a constant-temperature bath at 45 °C.

In the first cycle, each battery was charged at a constant current of 0.6 mA/cm$^2$ for 12.5 hours until the battery voltage reached a voltage of 2.8 V to 3.0 V. Then, the battery was discharged at a constant current of 0.6 mA/cm$^2$ for 12.5 hours until the battery voltage reached 1.0 V.

The discharge capacity in the first cycle was used as a standard capacity (shown as "Capacity" in the third row of Table 2). After the first cycle, charge and discharge were performed up to 150 cycles under the same conditions as the first cycle. The results of the measurement are shown in Table 1.

Throughout the charge-discharge cycles above, a rest period of 10 minutes was provided after each charge/discharge cycle. Some of the results of the cycling tests at room temperature are shown in Table 3. Initial efficiency is defined by Equation 1, and the capacity retention ratio is defined by Equation 2.

Equation 1

Initial Efficiency [%] = [Discharge Capacity in Formation Cycle / Charge Capacity in Formation Cycle] × 100

Equation 2

Capacity Retention Ratio [%] = [Discharge Capacity in 150$^{th}$ cycle / Discharge Capacity in 1$^{st}$ cycle] × 100 Table 2

| Specifications | Cathode Active Material Composition | Capacity (mAh/g) | Capacity Retention Ratio [%] |
|---|---|---|---|
| Manufacturing Example 1 | Example 1 ($Li_2$S-Gr+CNF) | 1017 | 95.3 |
| Manufacturing Example 2 | Example 2 ($Li_2$S-Gr-CNT) | 425 | 72.5 |
| Manufacturing Example 3 | Example 3 ($Li_2$S-Gr+CNF) | 832 | 80.2 |

(continued)

| Specifications | Cathode Active Material Composition | Capacity (mAh/g) | Capacity Retention Ratio [%] |
|---|---|---|---|
| Manufacturing Example 5 | Example 5 ($Li_2S$-Gr+CNF) | 784 | 82.6 |
| Manufacturing Example 6 | Example 6 ($Li_2S$-Gr-CNT) | 714 | 62.1 |
| Comparative Manufacturing Example 1 | Comparative Example 1 ($Li_2S$ only) | 0 | 0 |
| Comparative Manufacturing Example 2 | Comparative Example 2 ($Li_2S$+CNF) | 139 | 35.5 |
| Comparative Manufacturing Example 3 | Comparative Example 3 ($Li_2S$-CNT) | 686 | 55.2 |

As shown in Table 2, the composite cathode active materials of Examples 1, 3, and 5 utilizing Gr and CNF show improved capacity and an improved capacity retention ratio, as compared to the cathode active material of Comparative Example 1 utilizing lithium sulfide alone, the cathode active material of Comparative Example 2 utilizing lithium sulfide and CNF, and the cathode active material of Comparative Example 3 utilizing lithium sulfide and CNT. The all-solid secondary battery of Comparative Manufacturing example 1, utilizing the composite cathode active material of Comparative Example 1, shows no realization of capacity.

In one or more embodiments, the composite cathode active materials of Examples 1, 3, and 5 utilizing Gr and CNF show higher capacity and a higher capacity retention ratio than those of the composite cathode active materials of Examples 2 and 6 utilizing Gr and CNT. From this result, it can be seen that the composite cathode active materials obtained by mixing CNF as the second carbon-based material are more advantageous for improving capacity and capacity retention ratio than the composite cathode active materials obtained by milling CNT as the second carbon-based material.

The composite cathode active material of Example 2 utilizing Gr and CNT shows a smaller capacity yet a significantly improved capacity retention ratio relative to the composite cathode active material of Comparative Example 3.

According to an aspect of the disclosure, an all-solid secondary battery with improved capacity and lifetime may be provided by utilizing a composite cathode active material according to one or more embodiments of the present disclosure.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

**Claims**

1. A composite cathode active material comprising:

   a core comprising a lithium-containing sulfide-based cathode active material; and
   a shell covering a surface of the core,
   wherein the shell comprises at least one first metal oxide represented by formula $M_aO_b$ ($0<a\leq3$ and $0<b<4$, wherein when a is 1, 2, or 3, b is not an integer), a first carbon-based material, and a second carbon-based material,
   wherein the first metal oxide is within a matrix of the first carbon-based material, M is at least one metal selected from Groups 2 to 16 of the Periodic Table of Elements, and the second carbon-based material comprises a fibrous carbon having an aspect ratio of 10 or more.

2. The composite cathode active material of claim 1,
   wherein the first metal oxide comprises a metal and the metal is at least one metal selected from among Al, Nb, Mg, Sc, Ti, Zr, V, W, Mn, Fe, Co, Pd, Cu, Ag, Zn, Sb, Si, and Se.

3. The composite cathode active material of claim 1,
   wherein the first metal oxide is at least one selected from among $Al_2O_z$ ($0<z<3$), $NbO_x$ ($0<x<2.5$), $MgO_x$ ($0<x<1$), $Sc_2O_z$ ($0<z<3$), $TiO_y$ ($0<y<2$), $ZrO_y$ ($0<y<2$), $V_2O_z$ ($0<z<3$), $WO_y$ ($0<y<2$), $MnO_y$ ($0<y<2$), $Fe_2O_z$ ($0<z<3$), $Co_3O_w$ ($0<w<4$), $PdO_x$ ($0<x<1$), $CuO_x$ ($0<x<1$), $AgO_x$ ($0<x<1$), $ZnO_x$ ($0<x<1$), $Sb_2O_z$ ($0<z<3$), $SiO_z$ ($0<z<2$), and $SeO_y$ ($0<y<2$).

4. The composite cathode active material of claim 1,

   wherein the shell further comprises a second metal oxide represented by formula $M_aO_c$ ($0<a\leq3$ and $0<c\leq4$, wherein when a is 1, 2, or 3, c is an integer),
   the second metal oxide comprises a same metal as the first metal oxide, and
   a ratio (c/a) of c to a in the second metal oxide is greater than a ratio (b/a) of b to a in the first metal oxide.
   and/or the first metal oxide is a reduction product of the second metal oxide.

5. The composite cathode active material of claim 4,
   wherein the second metal oxide is selected from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, $SiO_2$, and $SeO_2$.

6. The composite cathode active material of claim 1,

   wherein the first carbon-based material comprises a carbon-based nanostructure, the carbon-based nanostructure comprises a two-dimensional carbon-based nanostructure, and
   the two-dimensional carbon-based nanostructure comprises graphene.

7. The composite cathode active material of claim 1,

wherein the second carbon-based material comprises a carbon nanofiber, a carbon nanotube, or a combination thereof. preferably,
wherein the carbon nanotube comprises a primary carbon nanotube structure, a secondary carbon nanotube structure formed by agglomeration of a plurality of primary carbon nanotube particles, or a combination thereof,
wherein the primary carbon nanotube structure is one carbon nanotube unit.

8. The composite cathode active material of claim 1,

wherein the lithium-containing sulfide-based cathode active material comprises $Li_2S_n$ (n≥1), a $Li_2S_n$ (n≥1)-containing composite, or a combination thereof, and
the lithium-containing sulfide-based cathode active material comprises a $Li_2S_n$ (n≥1)-containing composite and the $Li_2S_n$ (n≥1)-containing composite comprises a $Li_2S$-carbon composite, a $Li_2S$-carbon-solid electrolyte composite, a $Li_2S$-solid electrolyte composite, or a combination thereof, and/or
an amount of the second carbon-based material in the shell is about 5 wt% to about 20 wt% with respect to 100 wt% of the composite cathode active material.

9. A cathode comprising the composite cathode active material of claim 1

10. The cathode of claim 9, further comprising a solid electrolyte,
wherein an amount of the solid electrolyte is about 80 parts by weight to about 120 parts by weight with respect to 100 parts by weight of the composite cathode active material.

11. An all-solid secondary battery comprising:

a cathode layer;
an anode layer; and
a solid electrolyte layer between the cathode layer and the anode layer,
wherein the cathode layer comprises the cathode of claim 9.

12. The all-solid secondary battery of claim 11,

wherein the solid electrolyte layer comprises a sulfide-based solid electrolyte, an oxide-based solid electrolyte, a polymer solid electrolyte, or a combination thereof,
the polymer solid electrolyte comprises a dry polymer electrolyte, a gel polymer electrolyte, or a combination thereof, and
the solid electrolyte layer is impermeable to lithium polysulfides, and/or
the anode layer comprises an anode current collector and a first anode active material layer on one side of the anode current collector,
the first anode active material layer comprises an anode active material and a binder,
the first anode active material layer comprises at least one selected from a carbon-based anode active material or a metal or metalloid anode active material,
the carbon-based anode active material comprises amorphous carbon, crystalline carbon, porous carbon, or a combination thereof, and
the metal or metalloid anode active material comprises gold (Au), platinum (Pt), palladium (Pd), silicon (Si), silver (Ag), aluminum (Al), bismuth (Bi), tin (Sn), indium (In), zinc (Zn), or a combination thereof.

13. The all-solid secondary battery of claim 11,

wherein, after charging, the all-solid secondary battery further comprises a second anode active material layer between an anode current collector and a first anode active material layer,
wherein the second anode active material layer is a metal layer, the metal layer comprising lithium or a lithium alloy.

14. The all-solid secondary battery of claim 11,

wherein the cathode layer comprises a cathode current collector, the anode layer comprises an anode current collector, and at least one of the cathode current collector or the anode current collector comprises a base film and a metal layer on one side or both sides of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. A method of preparing a composite cathode active material, the method comprising:

a first process comprising:

providing a lithium-containing sulfide-based compound;
providing a composite; and
providing a second carbon-based material; and

a second process to prepare the composite cathode active material of claim 1, the second process comprising:

mechanically milling the lithium-containing sulfide-based compound, the composite, and the second carbon-based material, or
mechanically milling the lithium-containing sulfide-based compound and the composite to form a milling product; and mixing the milling product with the second carbon-based material

# FIG. 1

FIG. 2

11 12 } 10

30

22 21 } 20

# FIG. 3

Europäisches
Patentamt

European
Patent Office

Office européen
des brevets

**EUROPEAN SEARCH REPORT**

Application Number

EP 24 15 6291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIA LI ET AL: "Interface Design and Development of Coating Materials in Lithium-Sulfur Batteries", ADVANCED FUNCTIONAL MATERIALS, WILEY - V C H VERLAG GMBH & CO. KGAA, DE, vol. 28, no. 30, 27 May 2018 (2018-05-27), page n/a, XP072405595, ISSN: 1616-301X, DOI: 10.1002/ADFM.201801323 * 2.2.2 Atomic and molecular layer deposited coating materials * | 1-15 | INV. H01M4/136 H01M4/1397 H01M4/36 H01M4/46 H01M4/58 H01M4/62 H01M10/052 |
| A | WO 2022/260383 A1 (SAMSUNG SDI CO LTD [KR]) 15 December 2022 (2022-12-15) * Preparation Example 1 * * example 1 * | 1-15 | |
| A | CHEN YAN ET AL: "3D graphene framework supported Li 2 S coated with ultra-thin Al 2 O 3 films: binder-free cathodes for high-performance lithium sulfur batteries", JOURNAL OF MATERIALS CHEMISTRY A, vol. 5, no. 1, 7 January 2017 (2017-01-07) , pages 102-112, XP093181178, GB ISSN: 2050-7488, DOI: 10.1039/C6TA08039A * Experimental - Synthetic procedures * | 1-15 | TECHNICAL FIELDS SEARCHED (IPC) H01M |
| A | US 8 871 391 B2 (UT BATTELLE LLC [US]) 28 October 2014 (2014-10-28) * abstract * | 1-15 | |

The present search report has been drawn up for all claims

| Place of search | Date of completion of the search | Examiner |
|---|---|---|
| Munich | 2 July 2024 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

40

## ANNEX TO THE EUROPEAN SEARCH REPORT
## ON EUROPEAN PATENT APPLICATION NO.

EP 24 15 6291

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2024

| Patent document cited in search report | | Publication date | Patent family member(s) | | Publication date |
|---|---|---|---|---|---|
| WO 2022260383 | A1 | 15-12-2022 | CN 117242599 | A | 15-12-2023 |
| | | | EP 4354541 | A1 | 17-04-2024 |
| | | | JP 2024522031 | A | 10-06-2024 |
| | | | KR 20220165540 | A | 15-12-2022 |
| | | | US 2023268485 | A1 | 24-08-2023 |
| | | | WO 2022260383 | A1 | 15-12-2022 |
| US 8871391 | B2 | 28-10-2014 | US 2013295469 | A1 | 07-11-2013 |
| | | | US 2014080009 | A1 | 20-03-2014 |

EPO FORM P0459

For more details about this annex : see Official Journal of the European Patent Office, No. 12/82

**REFERENCES CITED IN THE DESCRIPTION**

**Patent documents cited in the description**

- KR 1020230039345